(19) Europäisches Patentamt
European Patent Office
Office européen des brevets

(11) **EP 4 258 574 A1**

(12) **EUROPEAN PATENT APPLICATION**
published in accordance with Art. 153(4) EPC

(43) Date of publication:
**11.10.2023 Bulletin 2023/41**

(51) International Patent Classification (IPC):
***H04B 17/309*** *(2015.01)*

(21) Application number: **21914458.1**

(52) Cooperative Patent Classification (CPC):
**G06N 3/04; G06N 3/08; H04B 17/309;
H04B 17/345; H04B 17/391; H04W 4/80;
H04W 24/08**

(22) Date of filing: **29.12.2021**

(86) International application number:
**PCT/CN2021/142308**

(87) International publication number:
**WO 2022/143724 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.12.2020  CN 202011637835**

(71) Applicant: **Huawei Technologies Co., Ltd.
Shenzhen, Guangdong 518129 (CN)**

(72) Inventors:
• **GUO, Ziyang
Shenzhen, Guangdong 518129 (CN)**
• **YANG, Xun
Shenzhen, Guangdong 518129 (CN)**
• **DONG, Mingjie
Shenzhen, Guangdong 518129 (CN)**
• **LIU, Peng
Shenzhen, Guangdong 518129 (CN)**
• **LUO, Jiajun
Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(54) **CHANNEL QUALITY EVALUATION METHOD AND RELATED APPARATUS**

(57) Embodiments of this application disclose a channel quality assessment method and a related apparatus. The method includes: A first device determines a first network parameter corresponding to a neural network structure used by the first device. The first device determines a first neural network model based on the first network parameter and the neural network structure. The first device determines a first channel quality assessment result based on the first neural network model and first interference information. The first interference information is interference information obtained by the first device through channel measurement within a first time, and the first channel quality assessment result indicates channel quality of a channel. Communication transmission may be performed between the first device and a second device connected to the first device based on the first channel quality assessment result, to improve communication transmission performance.

FIG. 3

## Description

This application claims priority to Chinese Patent Application No. CN202011637835.X, filed with the China National Intellectual Property Administration on December 31, 2020 and entitled "CHANNEL QUALITY ASSESSMENT METHOD AND RELATED APPARATUS", which is incorporated herein by reference in its entirety.

## TECHNICAL FIELD

This application relates to the field of communication technologies, and in particular, to a channel quality assessment method and a related apparatus.

## BACKGROUND

In recent years, products having a short-distance wireless transmission capability are increasingly diversified, and a quantity of users is growing. For example, the product having a short-distance wireless transmission capability is a wearable product such as a Bluetooth headset, a Bluetooth speaker, or a smartwatch. Most of these products use a Bluetooth technology or a derived Bluetooth technology for wireless transmission. The Bluetooth technology works on a 2.4 GHz frequency band and shares a spectrum with a Wi-Fi technology. As a result, severe interference exists when the Bluetooth technology is used for wireless transmission between different devices, and communication performance is poor and user experience is affected.

At present, an adaptive frequency hopping (adaptive frequency hopping, AFH) technology is used between devices to resist interference in a wireless environment to improve communication transmission performance. For example, in a Bluetooth system, a first Bluetooth device regularly or irregularly updates an adaptive frequency hopping map. A process of the first Bluetooth device updating the adaptive frequency hopping map may be understood as the first Bluetooth device performing channel quality assessment on a channel. The adaptive frequency hopping map indicates an available channel. The available channel is a channel with high channel quality. Then, the first Bluetooth device sends the adaptive frequency hopping map to a second Bluetooth device. Communication transmission between the first Bluetooth device and the second Bluetooth device is performed by using the adaptive frequency hopping map.

Therefore, how to assess channel quality to improve communication transmission performance is an important topic in current research.

## SUMMARY

An embodiment of this application provides a channel quality assessment method. The method includes: A first device determines a first network parameter corresponding to a neural network structure used by the first device. The first device determines a first neural network model based on the first network parameter and the neural network structure. The first device determines a first channel quality assessment result based on the first neural network model and first interference information. The first interference information is interference information obtained by the first device through channel measurement within a first time, and the first channel quality assessment result indicates channel quality of a channel.

Specifically, one or more neural network models are configured in a cloud device, and these neural network models are applicable to different scenarios. Different neural network models are further applicable to different first devices, and different neural network models are further applicable to different pieces of user level information. These neural network models may use different neural network structures, or these neural network models may use a same neural network structure and perform adaptive optimization training for different scenarios.

In this embodiment of this application, the cloud device determines the first network parameter corresponding to the neural network structure used by the first device. Then, the first device determines the first neural network model based on the first network parameter and the neural network structure. The first device determines the first channel quality assessment result based on the first neural network model and the first interference information. The first interference information is interference information obtained by the first device through channel measurement within the first time. The first channel quality assessment result indicates the channel quality of the channel. It can be learned that this embodiment of this application provides a channel quality assessment solution. To be specific, the first device assesses the channel based on the first neural network model and the first interference information obtained by the first device through channel measurement, to obtain the first channel quality assessment result. In this way, communication transmission may be performed between the first device and a second device connected to the first device based on the first channel quality assessment result, to improve communication transmission performance.

In an optional implementation, that a first device determines a first network parameter corresponding to a neural network structure used by the first device includes: The first device sends a first request to the cloud device, where the first request is used to request the cloud device to deliver the first network parameter. The first device receives the first network parameter from the cloud device.

In an optional implementation, the first network parameter is a network parameter corresponding to the neural network structure used by the first device when the first device is in a first scenario.

The first request includes at least one of the following: capability information, structure information, scenario information, or user level information. The capability information indicates that the first device supports channel quality assessment by using a neural network model. The structure information indicates the neural network structure used by the first device. The scenario information indicates the first scenario in which the first device is currently located. The user level information indicates a user level of the first device.

Specifically, the first device determines the capability information by using the following method: The first device determines, based on a computing capability (or a hardware parameter) of the first device, whether the first device supports channel quality assessment by using the neural network model. When the first device supports use of the neural network model, the capability information carried in the first request indicates that the first device supports use of the neural network model.

The structure information is related information of the neural network structure used by the first device. The structure information includes but is not limited to: a quantity of neurons at each layer in the neural network model supported by the first device, a quantity of layers of neurons in the neural network model supported by the first device, an inter-layer cascading relationship of the neural network model supported by the first device, and/or a network type at each layer in the neural network model supported by the first device.

The scenario information indicates the first scenario in which the first device is currently located. After determining location information of the first device (that is, a geographic location of the first device, for example, longitude and latitude coordinates of the first device), the first device marks, based on preset map information, the scenario information corresponding to the location information. This scenario may be understood as a channel environment.

The user level information indicates the user level of the first device. For example, the user level includes a VIP (VIP) user and a non-VIP user. The first device configures corresponding first network parameters for first devices of different user levels based on the user level information. For example, when the user level of the first device is a VIP user, the cloud device configures, for the first device based on the user level information, the first network parameter whose user level is the VIP user. The user level is the first network parameter of the VIP user, and has features such as stronger anti-interference performance and stronger communication transmission performance compared with the first network parameter whose user level is a non-VIP user.

The first request may further include device type information of the first device, for example, a device type of the first device and/or a device type of the second device that establishes a Bluetooth connection to the first device. This is not limited herein.

In this embodiment of this application, the first device sends the first request to the cloud device, so that the cloud device can learn related information of the first device. In this way, the cloud device configures a more accurate first network parameter for the first device, to improve communication performance of the first device.

In an optional implementation, that the first device sends a first request to the cloud device includes: The first device sends the first request to the cloud device when a first condition is met. The first condition includes: a packet loss rate of the first device within a time window is greater than or equal to a preset threshold when the first device performs data transmission with a second device based on a second channel quality assessment result. The second channel quality assessment result is determined by the first device based on a second neural network model and second interference information obtained by the first device through channel measurement within a second time, and the second neural network model is a neural network model determined by the first device based on a second network parameter delivered by the cloud device and the neural network structure.

In an optional implementation, that a first device determines a first network parameter corresponding to a neural network structure used by the first device includes: The first device assesses performance of a second neural network model, to obtain a first performance assessment result, where the second neural network model is a neural network model determined by the first device based on a second network parameter delivered by a cloud device and the neural network structure. The first device sends the first performance assessment result to the cloud device. The first device receives the first network parameter sent by the cloud device, where the first network parameter is a network parameter obtained by the cloud device through adjustment based on the first performance assessment result and the second neural network model.

Specifically, that the first device assesses performance of a second neural network model is specifically as follows: When the first device performs communication transmission with the second device based on the second channel quality assessment result, the first device collects statistics on a packet loss rate of communication between the first device and the second device within the time window.

Optionally, when the second condition is met, the first device determines that performance of the current second neural network model is inferior to performance of a historically used neural network model. The second condition is that the packet loss rate is greater than a historical minimum packet loss rate (the packet loss rate of communication between the first device and the second device). First, the first device determines a parameter of a neural network model corresponding to the historical minimum packet loss rate. Then, the first device notifies the cloud device of the parameter of the neural network model corresponding to the historical minimum packet loss rate and/or an indication of poor performance of the second neural network model by using a message. The message is referred to as a first performance assessment result. A length of the time window may be determined based on an actual requirement, for example, 3 to 5 seconds. This is not limited herein.

In this embodiment of this application, the first device may assess the performance of the second neural network model. When the performance of the second neural network model does not meet a requirement, the first device may notify the cloud device of the performance assessment result. The cloud device may deliver a new network parameter to the first device based on the performance assessment result, and configure a new neural network model for the first device, to effectively improve communication performance of the first device.

In an optional implementation, that a first device determines a first network parameter corresponding to a neural network structure used by the first device includes: The first device receives a second request from a cloud device, where the second request is used to request the first device to report interference information obtained through channel measurement. The first device sends third interference information to the cloud device, where the third interference information includes historical interference information obtained by the first device through channel measurement, and/or interference information obtained by the first device through channel measurement after the first device receives the second request. The first device receives the first network parameter sent by the cloud device, where the first network parameter is a network parameter obtained by the cloud device by updating a second neural network model of the cloud device based on the third interference information.

Optionally, the third interference information may be a signal strength indicator (Received Signal Strength Indicator, RSSI). The interference information may alternatively be another performance indicator of a channel. This is not limited herein. For example, the interference information is a packet loss rate, a signal-to-noise ratio (SIGNAL-NOISE RATIO, SNR), or a signal to interference plus noise ratio (Signal to Interference plus Noise Ratio, SINR), or may be a processed RSSI, for example, an RSSI average value or an RSSI residual obtained through compression processing. Alternatively, the third interference information may be an average value of RSSIs that are obtained by the first device through measurement, and a difference between each RSSI and the average value. For example, RSSIs of a channel obtained by the first device through measurement are {-88, -89, -85, -93, -95}. The average value is - 90, and differences between each RSSI and the average value are {2, 1, 5, -3, -5}. The third interference information sent by the first device to the cloud device is an average value {-90}, and differences between each RSSI and the average value are {2, 1, 5, -3, -5}. The third interference information may be implemented in a plurality of manners, to improve implementation flexibility of this solution.

In an optional implementation, the first channel quality assessment result is represented by using an adaptive frequency hopping channel map.

According to a second aspect, an embodiment of this application further provides a channel quality assessment method. A first device includes a mobile phone or a tablet, and the first device includes a display screen. The method further includes: The first device displays a first identifier. The first device detects a target operation for the first identifier. The first device performs the method according to the first aspect in response to the target operation.

According to a third aspect, an embodiment of this application further provides a channel quality assessment method. The method includes: First, a cloud device determines a first network parameter corresponding to a neural network structure used by a first device. Second, the cloud device sends the first network parameter to the first device, where the first network parameter is used by the first device to determine a first neural network model based on the neural network structure.

In this embodiment of this application, the cloud device determines the first network parameter for the first device based on the neural network structure used by the first device. The first network parameter is used by the first device to determine the first neural network model based on the neural network structure, so that the first device communicates with a second device by using the first neural network model, to improve communication performance.

In an optional implementation, before that a cloud device determines a first network parameter corresponding to a neural network structure used by a first device, the method includes: The cloud device receives a first request from the first device, where the first request is used to request the first network parameter corresponding to the neural network structure. The first request is similar to that of the first aspect, and details are not described herein again.

In this embodiment of this application, the cloud device receives the first request sent by the first device, and the cloud device may learn related information of the first device. In this way, the cloud device configures a more accurate first network parameter for the first device, to improve communication performance of the first device.

In an optional implementation, the first network parameter is a network parameter corresponding to a neural network model structure used by the first device when the first device is in a first scenario.

In an optional implementation, before that a cloud device determines a first network parameter corresponding to a neural network structure used by a first device, the cloud device receives a first performance assessment result sent by the first device, where the first performance assessment result is a first performance assessment result obtained by the first device by assessing performance of a second neural network model, and the second neural network model is a neural network model determined by the cloud device based on a second network parameter and the neural network structure. That a cloud device determines a first network parameter corresponding to a neural network structure used by a first device includes: The cloud device updates the second neural network model based on the first performance assessment result, to obtain the first neural network model. The cloud device determines the first network parameter corresponding to the first neural network model.

In this embodiment of this application, the first device may assess the performance of the second neural network model. When the performance of the second neural network model does not meet a requirement, the first device may notify the cloud device of the performance assessment result. The cloud device may deliver a new network parameter to the first device based on the performance assessment result, and configure a new neural network model for the first device, to effectively improve communication performance of the first device.

In an optional implementation, before that a cloud device determines a first network parameter corresponding to a neural network structure used by a first device, the cloud device sends a second request to the first device, where the second request is used to request the first device to report interference information obtained through channel measurement; and the cloud device receives third interference information from the first device, where the third interference information includes historical interference information obtained by the first device through channel measurement, and/or interference information obtained by the first device through channel measurement after the first device receives the second request. That a cloud device determines a first network parameter corresponding to a neural network structure used by a first device includes: The cloud device updates a second neural network model based on the third interference information, to obtain the first neural network model; and the cloud device determines the first network parameter corresponding to the first neural network model.

In this embodiment of this application, the cloud device may further update the neural network model of the cloud device based on the third interference information of the first device, to improve a degree of fitting between the neural network model in the cloud device and an actual channel, and further improve communication performance of the neural network model.

In an optional implementation, the cloud device obtains fourth interference information obtained by one or more devices through channel measurement at N moments; and the cloud device updates a third neural network model based on the fourth interference information obtained by the one or more devices through measurement at the N moments, to obtain the second neural network model, where N is an integer greater than or equal to 1.

Optionally, the cloud device classifies the obtained fourth interference information based on different device types of the first device. For example, the cloud device obtains fourth interference information obtained by one or more first-type devices through measurement at N moments.

Optionally, the cloud device updates a third neural network model based on the fourth interference information obtained by the one or more first-type devices through measurement at the N moments, to obtain the second neural network model, where N is an integer greater than or equal to 1.

In an implementation, for different types of devices (the first device), the cloud device updates and trains the third neural network model based on fourth interference information from different sources, to obtain the second neural network model. For example, for a first-type device, the cloud device updates and trains the third neural network model based on fourth interference information from the first-type device, to obtain the second neural network model. For a second-type device, the cloud device updates and trains the third neural network model based on fourth interference information from the second-type device, to obtain the second neural network model.

The cloud device sends, based on device type information carried in the first request reported by the first device, a network parameter of a corresponding neural network model to the first device. For example, when the first request reported by the first device indicates that the first device is the first-type device, the neural network model corresponding to the network parameter delivered by the cloud device is a neural network model obtained through training based on the fourth interference information reported by the first-type device.

In this embodiment of this application, for first devices of different types and first devices of different user levels, the cloud device may perform differentiation training on the neural network model. This can adapt to different service scenarios and meet differentiated communication performance requirements of users.

In an optional implementation, the first device is a VIP VIP device, and the first device is a first-type device; and the method further includes: The cloud device obtains fourth interference information obtained by one or more first-type devices through measurement at N moments; and the cloud device updates a third neural network model based on the fourth interference information obtained by the one or more first-type devices through measurement at the N moments, to obtain the second neural network model, where N is an integer greater than or equal to 1. The fourth interference information may be an RSSI, or may be another performance indicator of a channel. This is not limited herein. For example, the fourth interference information is a packet loss rate, a signal-to-noise ratio, or a signal to interference plus noise ratio (Signal to Interference plus Noise Ratio, SINR).

Specifically, for first devices of different user levels, the cloud device updates and trains the third neural network model based on fourth interference information that is from different sources and that has different quantities of samples, to obtain the second neural network model. For example, for a first-type device of a non-VIP device, the cloud device updates and trains the third neural network model based on fourth interference information whose quantity of samples is 5000, to obtain the second neural network model. The fourth interference information is from the first-type device. For a first-type device of a VIP device, the cloud device updates and trains the third neural network model based on fourth interference information whose quantity of samples is 50000, to obtain the second neural network model. The fourth interference information is from the first-type device. For a non-VIP second-type device, the cloud device updates and trains the third neural network model based on fourth interference information whose quantity of samples is 20000, to obtain the second neural network model. The fourth interference information is from the second-type device.

According to a fifth aspect, an embodiment of this application provides a channel quality assessment method. The method includes:

A first device receives a first channel quality assessment result from a cloud device. The first channel quality assessment result is determined by the cloud device based on first interference information and a first neural network model, the first channel quality assessment result indicates channel quality of a channel, and the first interference information is interference information obtained by the first device through channel measurement within a first time.

In this embodiment of this application, when the first device does not support channel quality assessment by using a neural network model, the cloud device performs processing by using the first neural network model based on the first interference information uploaded by the first device, to obtain the first channel quality assessment result through inference. Then, after receiving the first channel quality assessment result, the first device communicates with a second device based on the first channel quality assessment result. It can be learned that this embodiment of this application provides a channel quality assessment solution. To be specific, the cloud device assesses the channel based on the first neural network model and the first interference information obtained by the first device through channel measurement, to obtain the first channel quality assessment result. The cloud device sends the first channel quality assessment result to the first device. In this way, communication transmission may be performed between the first device and the second device connected to the first device based on the first channel quality assessment result, to improve communication transmission performance and anti-interference performance of the first device.

In an implementation, before that a first device receives a first channel quality assessment result from a cloud device, the first device sends a third request to the cloud device. The third request is used to request a channel quality assessment result of the channel.

In an implementation, the third request includes at least one of the following: capability information, delivery manner information, scenario information, or user level information. The capability information indicates that the first device does not support channel quality assessment by using a neural network model; the delivery manner information indicates a delivery manner of the first channel quality assessment result; the scenario information indicates a first scenario in which the first device is currently located; and the user level information indicates a user level of the first device.

The third request is similar to the first request in the first aspect, and details are not described herein again.

In an implementation, the first neural network model is a neural network model corresponding to the first scenario.

In an implementation, the first channel quality assessment result is represented by using an adaptive frequency hopping channel map.

In an implementation, the first device receives a first interference information request from the cloud device, where the first interference information request is used to request the first device to measure a channel and report obtained interference information; and the first device sends first interference information to the cloud device, where the first interference information is interference information obtained by the first device through channel measurement within a first time after receiving the first interference information request. The first interference information is similar to the first interference information in the first aspect, and details are not described herein again.

In an implementation, the first device assesses a second channel quality assessment result to obtain a second assessment result, where the second channel quality assessment result is a channel quality assessment result determined by the cloud device based on the second interference information obtained by the first device through channel measurement within a second time and a second neural network model; and the first device sends the second assessment result to the cloud device, where the second assessment result is used by the cloud device to update the second neural network model to obtain the first neural network model. The second assessment result is similar to the second assessment result in the first aspect, and details are not described herein again. In this embodiment of this application, the first device may assess performance of the second neural network model. When the performance of the second neural network model does not meet a requirement, the first device may notify the cloud device of the performance assessment result. The cloud device may deliver a new network parameter to the first device based on the performance assessment result, and configure a new neural network model for the first device, to effectively improve communication performance of the first device.

In an implementation, the first device receives a fourth request from the cloud device, where the fourth request is used to request the first device to report the interference information obtained by the first device through measurement; and the first device sends third interference information to the cloud device. The third interference information includes historical interference information obtained by the first device through channel measurement, and/or interference information obtained by the first device through channel measurement after the first device receives the fourth request, and the third interference information is used by the cloud device to update the second neural network model to obtain the first neural network model. The third interference information is similar to the third interference information in the first aspect, and details are not described herein again. The third interference information may be implemented in a plurality of manners, to improve implementation flexibility of this solution.

According to a fifth aspect, an embodiment of this application provides a channel quality assessment method. A first device includes a mobile phone or a tablet, and the first device includes a display screen. The method further includes: The first device displays a first identifier. The first device detects a target operation for the first identifier; and the first device performs the method according to the fourth aspect in response to the target operation.

According to a sixth aspect, an embodiment of this application provides a channel quality assessment method. The method includes:

A cloud device determines first interference information, where the first interference information is interference information obtained by a first device through channel measurement within a first time; the cloud device determines a first channel quality assessment result based on the first interference information and a first neural network model, where the first channel quality assessment result indicates channel quality of a channel; and the cloud device sends the first channel quality assessment result to the first device.

In an implementation, the cloud device receives a third request from the first device, where the third request is used to request a channel quality assessment result of the channel.

In an implementation, the third request includes at least one of the following: capability information, delivery manner information, scenario information, or user level information. The capability information indicates that the first device does not support channel quality assessment by using a neural network model; the delivery manner information indicates a delivery manner of the first channel quality assessment result; the scenario information indicates a first scenario in which the first device is currently located; and the user level information indicates a user level of the first device.

The third request is similar to the third request in the fourth aspect, and details are not described herein again.

In an implementation, the first neural network model is a neural network model corresponding to the first scenario.

In an implementation, the first channel quality assessment result is represented by using an adaptive frequency hopping channel map.

In an implementation, that a cloud device determines first interference information includes: The cloud device sends a first interference information request to the first device, where the first interference information request is used to request the first device to measure a channel and report obtained interference information; and the cloud device receives the first interference information from the first device.

In an implementation, the cloud device receives a second assessment result of the first device, where the second assessment result is an assessment result obtained by the first device by assessing a second channel quality assessment result, and the second channel quality assessment result is a channel quality assessment result determined by the cloud device based on second interference information obtained by the first device through channel measurement within a second time and a second neural network model; and the cloud device adjusts the second neural network model based on the second assessment result, to obtain the first neural network model.

In this embodiment of this application, the first device may assess performance of the second neural network model. When the performance of the second neural network model does not meet a requirement, the first device may notify the cloud device of the performance assessment result. The cloud device may deliver a new network parameter to the first device based on the performance assessment result, and configure a new neural network model for the first device, to effectively improve communication performance of the first device.

In an implementation, the cloud device sends a fourth request to the first device, where the fourth request is used to request the first device to measure a channel and report obtained interference information; the cloud device receives third interference information from the first device, where the third interference information includes historical interference information obtained by the first device through channel measurement, and/or interference information obtained by the first device through channel measurement after the first device receives the fourth request; and the cloud device updates the second neural network model based on the third interference information, to obtain the first neural network model.

In this embodiment of this application, the cloud device may further update the neural network model of the cloud device based on the third interference information of the first device, to improve a degree of fitting between the neural network model in the cloud device and an actual channel, and further improve communication performance of the neural network model.

In an implementation, the cloud device obtains fourth interference information obtained by one or more devices through channel measurement at N moments; and the cloud device updates a third neural network model based on the fourth interference information obtained by the one or more devices on a channel at the N moments, to obtain the second neural network model, where N is an integer greater than or equal to 1.

In this embodiment of this application, for first devices of different types and first devices of different user levels, the cloud device may perform differentiation training on the neural network model. This can adapt to different service scenarios and meet differentiated communication performance requirements of users.

In an optional implementation, the first device is a VIP VIP device, and the first device is a first-type device; and the method further includes: The cloud device obtains fourth interference information obtained by one or more first-type devices through measurement at N moments; and the cloud device updates a third neural network model based on the fourth interference information obtained by the one or more first-type devices through measurement at the N moments, to obtain the second neural network model, where N is an integer greater than or equal to 1. The fourth interference information may be an RSSI, or may be another performance indicator of a channel. This is not limited herein. For example, the fourth interference information is a packet loss rate, a signal-to-noise ratio, or a signal to interference plus noise ratio (Signal to Interference plus Noise Ratio, SINR).

According to a seventh aspect, an embodiment of this application further provides a communication apparatus. The communication apparatus includes a processing module.

The processing module is configured to determine a first network parameter corresponding to a neural network structure used by a first device.

The processing module is further configured to determine a first neural network model based on the first network parameter and the neural network structure.

The processing module is further configured to determine a first channel quality assessment result based on the first neural network model and first interference information. The first interference information is interference information obtained by the first device through channel measurement within a first time, and the first channel quality assessment result indicates channel quality of a channel.

In an implementation, the communication apparatus further includes a transceiver module.

The transceiver module is configured to send a first request to a cloud device. The first request is used to request the cloud device to deliver the first network parameter.

The transceiver module is further configured to receive the first network parameter from the cloud device.

In an implementation, the first request includes at least one of the following: capability information, structure information, scenario information, or user level information.

The capability information indicates that the first device supports channel quality assessment by using a neural network model.

The structure information indicates the neural network structure used by the first device.

The scenario information indicates a first scenario in which the first device is currently located.

The user level information indicates a user level of the first device.

In an implementation, the first network parameter is a network parameter corresponding to the neural network structure used by the first device when the first device is in the first scenario.

In an implementation, the transceiver module is further configured to send the first request to the cloud device when a first condition is met.

The first condition includes: a packet loss rate of the first device within a time window is greater than or equal to a preset threshold when the first device performs data transmission with a second device based on a second channel quality assessment result.

The second channel quality assessment result is determined by the first device based on a second neural network model and second interference information obtained by the first device through channel measurement within a second time, and the second neural network model is a neural network model determined by the first device based on a second network parameter delivered by the cloud device and the neural network structure.

In an implementation, the processing module is further configured to assess performance of a second neural network model, to obtain a first performance assessment result. The second neural network model is a neural network model determined by the first device based on a second network parameter delivered by a cloud device and the neural network structure.

A transceiver module is further configured to send the first performance assessment result to the cloud device.

The transceiver module is further configured to receive the first network parameter sent by the cloud device. The first network parameter is a network parameter obtained by the cloud device through adjustment based on the first performance assessment result and the second neural network model.

In an implementation, the processing module is further configured to assess the performance of the second neural network model when a second condition is met, to obtain the first performance assessment result.

The second condition includes: a packet loss rate of the first device within a time window is greater than a historical minimum packet loss rate when the first device performs communication transmission with the second device based on a second channel quality assessment result, and the second channel quality assessment result is a channel quality assessment result determined by the first device based on the second neural network model and second interference information obtained by the first device through channel measurement within a second time.

In an implementation, a transceiver module is further configured to receive a second request from a cloud device. The second request is used to request the first device to report interference information obtained through channel measurement.

The transceiver module is further configured to send third interference information to the cloud device. The third interference information includes historical interference information obtained by the first device through channel measurement, and/or interference information obtained by the first device through channel measurement after the first device receives the second request.

The transceiver module is further configured to receive the first network parameter sent by the cloud device. The first network parameter is a network parameter obtained by the cloud device by updating a second neural network model of the cloud device based on the third interference information.

In an implementation, the first channel quality assessment result is represented by using an adaptive frequency hopping channel map.

According to an eighth aspect, an embodiment of this application further provides a communication apparatus. The communication apparatus includes a processing module and a transceiver module.

The processing module is configured to determine a first network parameter corresponding to a neural network structure used by a first device.

The transceiver module is configured to send the first network parameter to the first device. The first network parameter is used by the first device to determine a first neural network model based on the neural network structure.

In an implementation, the transceiver module is further configured to receive a first request from the first device. The first request is used to request the first network parameter corresponding to the neural network structure.

In an implementation, the first request includes at least one of the following: capability information, structure information, scenario information, or user level information.

The capability information indicates that the first device supports channel quality assessment by using a neural network model.

The structure information indicates the neural network structure used by the first device.

The scenario information indicates a first scenario in which the first device is currently located.

The user level information indicates a user level of the first device.

In an implementation, the first network parameter is a network parameter corresponding to a neural network model structure used by the first device when the first device is in a first scenario.

In an implementation, the transceiver module is further configured to receive a first performance assessment result sent by the first device. The first performance assessment result is a first performance assessment result obtained by the first device by assessing performance of a second neural network model, and the second neural network model is a neural network model determined by a cloud device based on a second network parameter and the neural network structure.

That the processing module is further configured to determine a first network parameter corresponding to a neural network structure used by a first device includes:

the processing module is further configured to update the second neural network model based on the first performance assessment result, to obtain the first neural network model; and

the processing module is further configured to determine the first network parameter corresponding to the first neural network model.

In an implementation, the transceiver module is further configured to send a second request to the first device. The second request is used to request the first device to report interference information obtained through channel measurement.

The transceiver module is further configured to receive third interference information from the first device. The third interference information includes historical interference information obtained by the first device through channel measurement, and/or interference information obtained by the first device through channel measurement after the first device receives the second request.

That the processing module is configured to determine a first network parameter corresponding to a neural network structure used by a first device includes:

the processing module updates a second neural network model based on the third interference information, to obtain the first neural network model; and

the processing module determines the first network parameter corresponding to the first neural network model.

In an implementation, the transceiver module is further configured to obtain fourth interference information obtained by one or more devices through channel measurement at N moments.

The processing module is further configured to update a third neural network model based on the fourth interference information obtained by the one or more devices through measurement at the N moments, to obtain the second neural network model. N is an integer greater than or equal to 1.

According to a ninth aspect, an embodiment of this application further provides a communication apparatus, including: a transceiver module, configured to receive a first channel quality assessment result from a cloud device. The first channel quality assessment result is determined by the cloud device based on first interference information and a first neural network model, the first channel quality assessment result indicates channel quality of a channel, and the first interference information is interference information obtained by the first device through channel measurement within a first time.

In an implementation, the transceiver module is further configured to send a third request to the cloud device. The third request is used to request a channel quality assessment result of the channel.

In an implementation, the third request includes at least one of the following: capability information, delivery manner information, scenario information, or user level information.

The capability information indicates that the first device does not support channel quality assessment by using a neural network model.

The delivery manner information indicates a delivery manner of the first channel quality assessment result.

The scenario information indicates a first scenario in which the first device is currently located.

The user level information indicates a user level of the first device.

In an implementation, the first neural network model is a neural network model corresponding to the first scenario.

In an implementation, the first channel quality assessment result is represented by using an adaptive frequency hopping channel map.

In an implementation, the transceiver module is further configured to receive a first interference information request from the cloud device. The first interference information request is used to request the first device to measure a channel and report obtained interference information.

The transceiver module is further configured to send first interference information to the cloud device. The first interference information is interference information obtained by the first device through channel measurement within a first time after receiving the first interference information request.

In an implementation, a processing module is configured to assess a second channel quality assessment result to obtain a second assessment result. The second channel quality assessment result is a channel quality assessment result determined by the cloud device based on the second interference information obtained by the first device through channel measurement within a second time and a second neural network model.

The transceiver module is further configured to send the second assessment result to the cloud device. The second assessment result is used by the cloud device to update the second neural network model to obtain the first neural network model.

In an implementation, the transceiver module is further configured to receive a fourth request from the cloud device. The fourth request is used to request the first device to report the interference information obtained by the first device through measurement.

The transceiver module is further configured to send third interference information to the cloud device. The third interference information includes historical interference information obtained by the first device through channel measurement, and/or interference information obtained by the first device through channel measurement after the first device receives the fourth request, and the third interference information is used by the cloud device to update the second neural network model to obtain the first neural network model.

According to a tenth aspect, an embodiment of this application further provides a communication apparatus, including: a processing module, configured to determine first interference information. The first interference information is interference information obtained by a first device through channel measurement within a first time.

The processing module is further configured to determine a first channel quality assessment result based on the first interference information and a first neural network model. The first channel quality assessment result indicates channel quality of a channel.

A transceiver module is configured to send the first channel quality assessment result to the first device.

In an implementation, the transceiver module is further configured to receive a third request from the first device. The third request is used to request a channel quality assessment result of the channel.

In an implementation, the third request includes at least one of the following: capability information, delivery manner information, scenario information, or user level information.

The capability information indicates that the first device does not support channel quality assessment by using a neural network model.

The delivery manner information indicates a delivery manner of the first channel quality assessment result.

The scenario information indicates a first scenario in which the first device is currently located.

The user level information indicates a user level of the first device.

In an implementation, the first neural network model is a neural network model corresponding to the first scenario.

In an implementation, the first channel quality assessment result is represented by using an adaptive frequency hopping channel map.

In an implementation, the transceiver module is further configured to send a first interference information request to the first device. The first interference information request is used to request the first device to measure a channel and report obtained interference information.

The transceiver module is further configured to receive the first interference information from the first device.

In an implementation, the transceiver module is further configured to receive a second assessment result of the first device. The second assessment result is an assessment result obtained by the first device by assessing a second channel quality assessment result, and the second channel quality assessment result is a channel quality assessment result determined by a cloud device based on second interference information obtained by the first device through channel measurement within a second time and a second neural network model.

The processing module is further configured to adjust the second neural network model based on the second assessment result, to obtain the first neural network model.

In an implementation, the transceiver module is further configured to send a fourth request to the first device. The fourth request is used to request the first device to measure a channel and report obtained interference information.

The transceiver module is further configured to receive third interference information from the first device. The third interference information includes historical interference information obtained by the first device through channel measurement, and/or interference information obtained by the first device through channel measurement after the first device receives the fourth request.

The processing module is further configured to update a second neural network model based on the third interference information, to obtain the first neural network model.

In an implementation, the transceiver module is further configured to obtain fourth interference information obtained by one or more devices through channel measurement at N moments.

The processing module is further configured to update a third neural network model based on the fourth interference information obtained by the one or more devices on a channel at the N moments, to obtain the second neural network model. N is an integer greater than or equal to 1.

In an implementation, the transceiver module is further configured to obtain fourth interference information obtained by one or more first-type devices through channel measurement at N moments.

The processing module is further configured to update a third neural network model based on the fourth interference information obtained by the one or more first-type devices on a channel at N moments, to obtain the second neural network model. N is an integer greater than or equal to 1.

An eleventh aspect of embodiments of this application provides a communication apparatus. The communication apparatus includes a processor, a memory, and a transceiver connected to the processor. The memory stores a computer program or computer instructions, and the processor is further configured to invoke and run the computer program or the computer instructions stored in the memory, so that the processor implements any one of the first aspect to the sixth aspect or any one of the implementations of the first aspect to the sixth aspect.

Optionally, the processor is configured to control the transceiver to perform any one of the first aspect to the sixth aspect or any one of the implementations of the first aspect to the sixth aspect.

A twelfth aspect of embodiments of this application provides a computer program product that includes computer instructions. When the computer program product runs on a computer, the computer is enabled to perform any one of the first aspect to the sixth aspect or any one of the implementations of the first aspect to the sixth aspect.

A thirteenth aspect of embodiments of this application provides a computer-readable storage medium that includes computer instructions. When the computer instructions are run on a computer, the computer is enabled to perform any one of the first aspect to the sixth aspect or any one of the implementations of first aspect to the sixth aspect.

A fourteenth aspect of embodiments of this application provides a communication apparatus. The communication apparatus includes an entity such as a network device, a terminal device, or a chip. The communication apparatus includes a processor, configured to invoke a computer program or computer instructions in a memory, so that the processor performs any one of the first aspect to the sixth aspect or any one of the implementations of first aspect to the sixth aspect.

Optionally, the processor is coupled to the memory through an interface.

A fifteenth aspect of embodiments of this application provides a communication system. The communication system includes the communication apparatus according to the seventh aspect, the communication apparatus according to the eighth aspect, the communication apparatus according to the ninth aspect, and/or the communication apparatus according to the tenth aspect.

A sixteenth aspect of embodiments of this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is output by the processor, other processing may further need to be performed on the information before the information arrives at the transceiver. Similarly, when the processor receives the foregoing input information, the transceiver receives the foregoing information, and inputs the foregoing information into the processor. Further, after the transceiver receives the foregoing information, other processing may need to be performed on the foregoing information before the information is input into the processor.

Based on the foregoing principle, for example, the receiving the first network parameter from the cloud device mentioned in the foregoing method may be understood as inputting the first network parameter by the processor. For another example, sending the first request may be understood as outputting the first request by the processor.

Unless otherwise specified, or if operations such as transmitting, sending, and receiving related to the processor do not contradict an actual function or internal logic of the operations in related descriptions, all the operations may be more generally understood as operations such as outputting, receiving, and inputting of the processor, instead of operations such as transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, such as a read-only memory (read only memory, ROM). The memory and the processor may be integrated into one chip, or may be separately disposed in different chips. A type of the memory and a manner in which the memory and the processor are disposed are not limited in this embodiment of this application.

A fifteenth aspect of embodiments of this application provides a chip system. The chip system includes a processor and an interface. The interface is configured to obtain a program or instructions. The processor is configured to invoke the program or the instructions to implement or support a terminal device in implementing a function in the first aspect, the second aspect, the third aspect, the fourth aspect, the fifth aspect, or the sixth aspect, for example, determining or processing at least one of data and information in the foregoing method.

In a possible design, the chip system further includes a memory. The memory is configured to store program instructions and data that are necessary for the terminal device. The chip system may include a chip, or may include a chip and another discrete component.

A sixteenth aspect of embodiments of this application provides a chip system. The chip system includes a processor and an interface. The interface is configured to obtain a program or instructions. The processor is configured to invoke the program or the instructions to implement or support a network device in implementing a function in the first aspect, the second aspect, the third aspect, the fourth aspect, the fifth aspect, or the sixth aspect, for example, determining or processing at least one of data and information in the foregoing method.

In a possible design, the chip system further includes a memory. The memory is configured to store program instructions and data that are necessary for the network device. The chip system may include a chip, or may include a chip and another discrete component.

## BRIEF DESCRIPTION OF DRAWINGS

FIG. 1a is an example diagram of an architecture of a communication system to which an embodiment of this application may be applied;
FIG. 1b is an example diagram of a structure of a Bluetooth headset according to an embodiment of this application;
FIG. 1c is a schematic diagram of a structure of a first device according to an embodiment of this application;
FIG. 2a is a schematic diagram of an adaptive frequency hopping technology according to an embodiment of this application;
FIG. 2b is a schematic diagram of a Bluetooth frequency hopping selection mechanism according to an embodiment of this application;
FIG. 3 is a schematic diagram of an embodiment of a channel quality assessment method according to an embodiment of this application;
FIG. 4 is a schematic diagram of another embodiment of a channel quality assessment method according to an embodiment of this application;
FIG. 5a is a schematic diagram of still another embodiment of a channel quality assessment method according to an embodiment of this application;

FIG. 5b is a schematic diagram of still another embodiment of a channel quality assessment method according to an embodiment of this application;

FIG. 6 is a schematic diagram of still another embodiment of a channel quality assessment method according to an embodiment of this application;

FIG. 7 is a schematic diagram of still another embodiment of a channel quality assessment method according to an embodiment of this application;

FIG. 8 is a schematic diagram of still another embodiment of a channel quality assessment method according to an embodiment of this application;

FIG. 9 is a schematic diagram of a structure of a neural network model according to an embodiment of this application;

FIG. 10 is a schematic diagram of an interaction embodiment of a channel quality assessment method according to an embodiment of this application;

FIG. 11 is a schematic diagram of an interface according to an embodiment of this application;

FIG. 12 is a schematic diagram of another interface according to an embodiment of this application;

FIG. 13 is a schematic diagram of a communication apparatus according to an embodiment of this application;

FIG. 14 is a schematic diagram of a communication apparatus according to an embodiment of this application;

FIG. 15 is a schematic diagram of a communication apparatus according to an embodiment of this application; and

FIG. 16 is a schematic diagram of a communication apparatus according to an embodiment of this application.

## DESCRIPTION OF EMBODIMENTS

Embodiments of this application provide a channel quality assessment method and a related apparatus, to effectively improve anti-interference performance of a device and improve communication transmission performance.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any variant thereof are intended to cover non-exclusive inclusion, so that a process, method, system, product, or device that includes a series of units is not necessarily limited to those units, but may include other units not expressly listed or inherent to such a process, method, product, or device.

The following clearly describes the technical solutions in embodiments of this application with reference to the accompanying drawings in embodiments of this application. In descriptions of this application, "/" means "or" unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural.

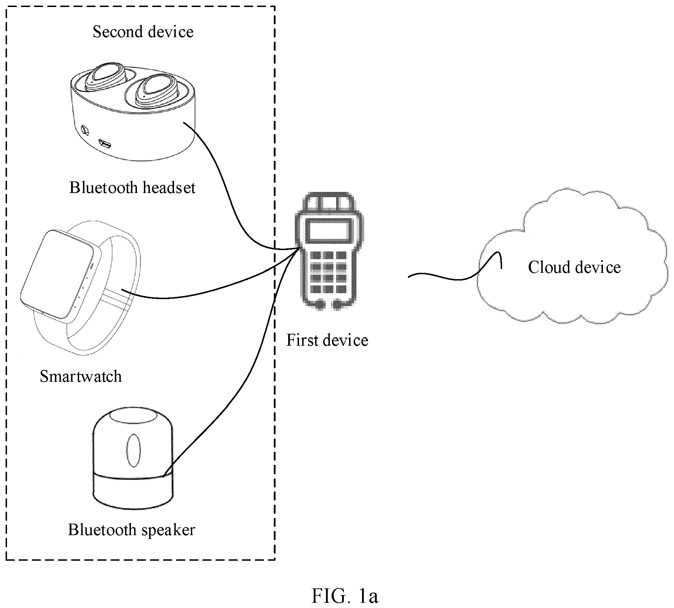

FIG. 1a is an example diagram of an architecture of a communication system to which an embodiment of this application may be applied. As shown in FIG. 1a, the communication system includes a second device (namely, the second device in FIG. 1a) and a first device (namely, the first device in FIG. 1a). A communication connection between the second device and the first device may be any one of wireless fidelity Wi-Fi, Bluetooth, ZigBee, device-to-device D2D communication, near field communication NFC, or another wireless communication method. In this embodiment of this application, an example in which a Bluetooth connection is established between the second device and the first device is used for description. The first device and the second device may implement short-range data exchange between the second device and the first device based on the established Bluetooth connection.

In some embodiments, for example, the second device is a Bluetooth headset. Audio data may be transmitted between the Bluetooth headset and the first device based on the Bluetooth connection. For example, based on the Bluetooth connection, the Bluetooth headset may be used as an audio input/output device of the first device to implement a call. For another example, based on the Bluetooth connection, the Bluetooth headset may be used as an output device of the first device, for example, playing music.

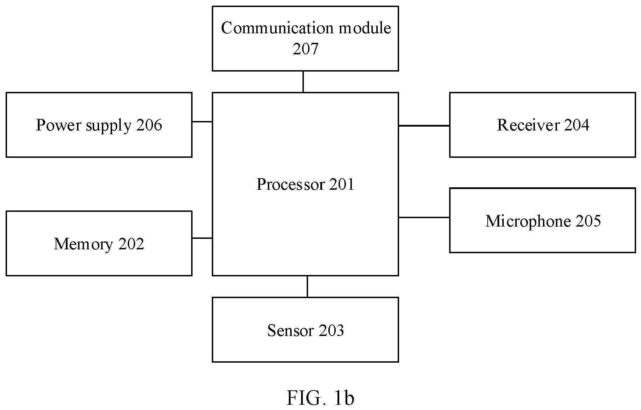

For example, FIG. 1b is an example diagram of a structure of a Bluetooth headset according to an embodiment of this application. The Bluetooth headset may include a processor 201, a memory 202, a sensor 203, at least one receiver 204, at least one microphone 205, a power supply 206, and a communication module 207. When the second device is a Bluetooth headset, the second device may establish a communication connection to another device (for example, the first device) by using the communication module 207. When the communication connection is a Bluetooth connection, the communication module 207 may also be referred to as a Bluetooth communication module.

The memory 202 may be configured to store application program code, for example, application program code that enables the Bluetooth headset to be paired with the first device. The processor 201 may control execution of the foregoing application program code, to implement a function of the Bluetooth headset in this embodiment.

The memory 202 may further store a Bluetooth address used to uniquely identify the Bluetooth headset. In addition, the memory 202 may further store connection data of the first device that is successfully paired with the Bluetooth headset before. For example, the connection data may be a Bluetooth address of the first device that is successfully paired with the Bluetooth headset. Based on the connection data, the Bluetooth headset can be automatically paired with the first device, and there is no need to configure a connection between the Bluetooth headset and the first device. For example, validity verification is not required. The Bluetooth address may be a media access control (media access control, MAC) address.

The sensor 203 may be a distance sensor or an optical proximity sensor. The processor 201 of the Bluetooth headset may determine, by using the sensor 203, whether the Bluetooth headset is worn by a user. For example, the processor 201 of the Bluetooth headset may detect, by using the optical proximity sensor, whether there is an object near the Bluetooth headset, to determine whether the Bluetooth headset is worn by the user. When determining that the Bluetooth headset is worn, the processor 201 of the Bluetooth headset may start the receiver 204. In some embodiments, the Bluetooth headset may further include a bone conduction sensor, to constitute a bone conduction headset. The bone conduction sensor may obtain a vibration signal of a vibration bone of a sound part, and the processor 201 parses out a speech signal, to implement a control function corresponding to the speech signal. In some other embodiments, the Bluetooth headset may further include a touch sensor or a pressure sensor, to detect a touch operation or a pressing operation of the user. In some other embodiments, the Bluetooth headset may further include a fingerprint sensor, configured to detect a user fingerprint, identify a user identity, and the like. In some other embodiments, the Bluetooth headset may further include an ambient light sensor. The processor 201 of the Bluetooth headset may adaptively adjust some parameters such as volume based on luminance of ambient light sensed by the ambient light sensor.

The microphone 205 may also be referred to as a "mike" or a "microphone", and is configured to convert a sound signal into an audio electrical signal. For example, when the Bluetooth headset is used as an audio input device of the first device, and the user speaks (for example, makes a call or sends a voice message), the microphone 205 may capture a sound signal of the user, and convert the sound signal into an audio electrical signal. The foregoing audio electrical signal is the audio data in this embodiment.

The power supply 206 may be configured to supply power to components included in the Bluetooth headset. In some embodiments, the power supply 206 may be a battery, for example, a rechargeable battery.

It may be understood that the structure shown in this embodiment does not constitute a specific limitation on the Bluetooth headset. The Bluetooth device may have more or fewer components than those shown in FIG. 1b, may combine two or more components, or may have different component configurations. For example, the Bluetooth headset may further include components such as an indicator (which may indicate a status such as a battery level) and a dust filter (which may be used with the earpiece). Various components shown in FIG. 1b may be implemented in hardware, software, or a combination of hardware and software including one or more signal processing or application-specific integrated circuits.

It should be noted that the Bluetooth headset may include a left earbud and a right earbud. Structures of the left earbud and the right earbud may be the same. For example, both the left earbud and the right earbud of the Bluetooth headset may include the components shown in FIG. 1b. Alternatively, structures of the left earbud and the right earbud of the Bluetooth headset may be different. For example, one earbud (for example, the right earbud) of the Bluetooth headset may include the components shown in FIG. 1b, and the other earbud (for example, the left earbud) may include another component other than the microphone 205 in FIG. 1b.

Optionally, the second device may alternatively be any one of the following Bluetooth devices, for example, a Bluetooth speaker, a Bluetooth wristband, a Bluetooth vehicle-mounted device, and Bluetooth smart glasses. A specific form of the Bluetooth device is not limited in this embodiment of this application.

In some embodiments, the first device may be a mobile phone (as shown in FIG. 1a), a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device, a media player, a television, or the like. A specific form of the device is not specifically limited in this embodiment.

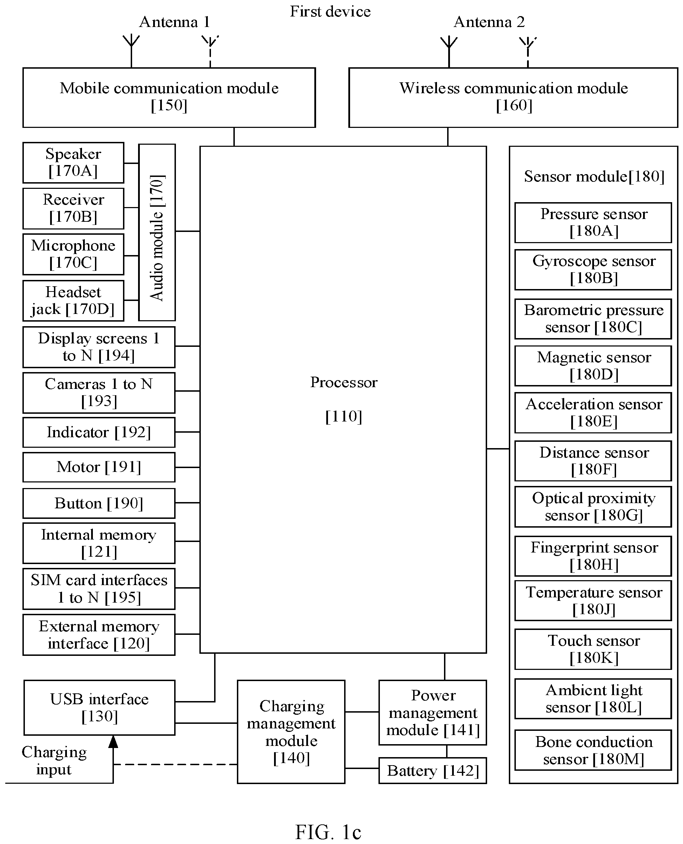

In an embodiment of this application, a structure of the first device may be shown in FIG. 1c. FIG. 1c is a schematic diagram of a structure of a first device according to an embodiment of this application.

As shown in FIG. 1c, the first device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment does not constitute a specific limitation on the first device. In some other embodiments, the first device may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instruction or the data again, the processor 110 may directly invoke the instruction or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment is merely an example for description, and does not constitute a limitation on a structure of the first device. In some other embodiments of this application, the first device may alternatively use different interface connection manners in the foregoing embodiments, or a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive wireless charging input through a wireless charging coil of the first device. When charging the battery 142, the charging management module 140 may further supply power to the first device by using the power management module 141.

A wireless communication function of the first device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or future 6G and that is applied to the first device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display screen 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the first device and that includes a wireless local area network (wireless local area networks, WLAN) (such as a wireless fidelity (wireless fidelity, Wi-Fi) network), Bluetooth (blue tooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the first device is coupled to the mobile communication module 150, and the antenna 2 is coupled to the wireless communication module 160, so that the first device can communicate with a network and another device by using a wireless communication technology. The wireless communication technology may include long term evolution (long term evolution, LTE), a 5th generation (5th Generation) communication system, BT, a GNSS, a WLAN, an NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The first device implements a display function through the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs, which execute program instructions to generate or change display information.

The internal memory 121 may be configured to store computer-executable program code, and the executable program code includes instructions. The processor 110 runs the instructions stored in the internal memory 121, to implement various function applications of the first device and process data. For example, in this embodiment, the processor 110 may implement a Bluetooth switching function by executing the instructions stored in the internal memory 121. The internal memory 121 may include a program storage area and a data storage area. The program storage area may store an operating system, an application required by at least one function (for example, a voice playing function or an image playing function), and the like. The data storage area may store data (for example, audio data or a phone book) created during use of the first device, and the like. In addition, the internal memory 121 may include a highspeed random access memory, or may include a nonvolatile memory, for example, at least one magnetic disk storage device, a flash memory, or a universal flash storage (universal flash storage, UFS). The processor 110 runs the instruction stored in the internal memory 121 and/or the instructions stored in the memory disposed in the processor, to perform various function applications of the first device and data processing.

The touch sensor 180K is also referred to as a "touch component". The touch sensor 180K may be disposed on the display screen 194, and the touch sensor 180K and the display screen 194 constitute a touchscreen, which is also referred to as a "touch control screen". The touch sensor 180K is configured to detect a touch operation performed on or near the touch sensor. The touch sensor may transfer the detected touch operation to the application processor to determine a type of the touch event. A visual output related to the touch operation may be provided through the display screen 194. In some other embodiments, the touch sensor 180K may alternatively be disposed on a surface of the first device, and is located at a position different from that of the display screen 194.

The following describes some background technologies in embodiments of this application.

(1) Frequency hopping

With development of technologies, more and more wireless devices enter people's life; for example, a true wireless stereo (True Wireless Stereo, TWS) headset, a Bluetooth speaker, and a smartwatch. When a plurality of wireless devices simultaneously work, mutual interference is usually caused. As a result, communication performance deteriorates, and user experience is affected.

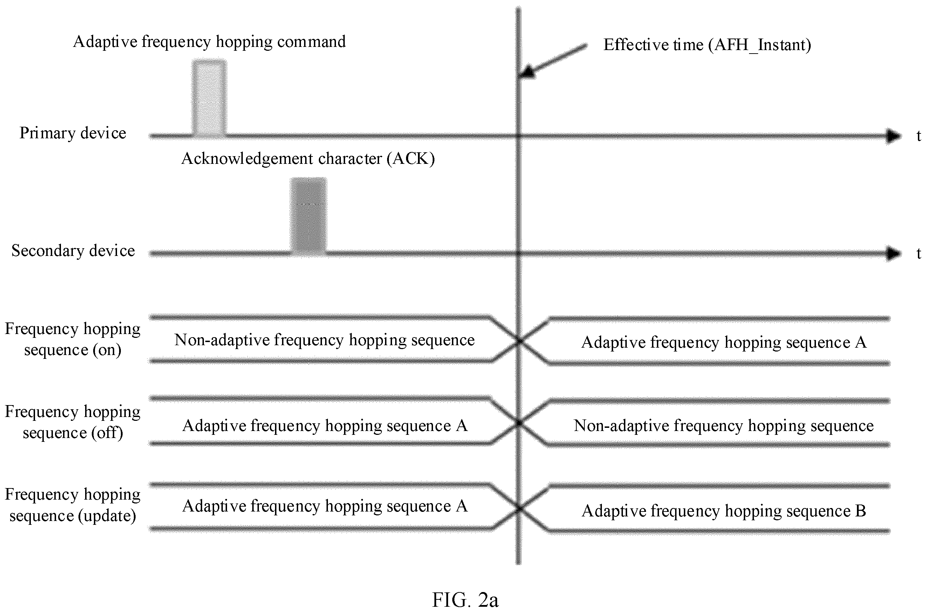

At present, a frequency hopping technology is an effective way to resist interference. A Bluetooth technology is used as an example. An adaptive frequency hopping (Adaptive Frequency Hopping, AFH) technology can be used to resist interference in a wireless environment. For ease of understanding, FIG. 2a is a schematic diagram of an adaptive frequency hopping technology according to an embodiment of this application. A first device regularly or irregularly updates an adaptive frequency hopping channel map (AFH_channel_map) and sends the updated adaptive frequency hopping channel map to the second device. After an effective time (AFH Instant), the first device works on an available channel defined by the frequency hopping map. In this embodiment of this application, the adaptive frequency hopping channel map may be referred to as a frequency hopping map for short. This is not limited herein. In the Bluetooth standard, two communication parties are classified into a first device and a second device, and a device that initiates a connection is the first device. For example, in a scenario in which a mobile phone is connected to a Bluetooth headset, the mobile phone is generally the first device, and the headset is the second device. The frequency hopping map is determined by the first device, and indicates a currently available channel. For example, if 79 channels are specified in a Bluetooth BR/EDR version, the frequency hopping map includes 79 bits, and each bit corresponds to a classification status of one channel. "1" indicates "available", and "0" indicates "unavailable". A process of determining the frequency hopping map is generally referred to as channel quality assessment, and a channel quality assessment scheme is an important factor that determines Bluetooth anti-interference performance. It should be noted that, in this embodiment of this application, a Bluetooth communication scenario is used as an example for description, and a channel quality assessment result in the scenario is a frequency hopping map. It may be understood that the channel quality assessment result is not limited to the frequency hopping map. For example, the channel quality assessment result may be a channel quality assessment result in a 5G communication scenario, or the channel quality assessment result may be a channel quality assessment result in a ZigBee communication scenario, or the channel quality assessment result may be a channel quality assessment result in a Wi-Fi communication scenario. This is not limited herein.

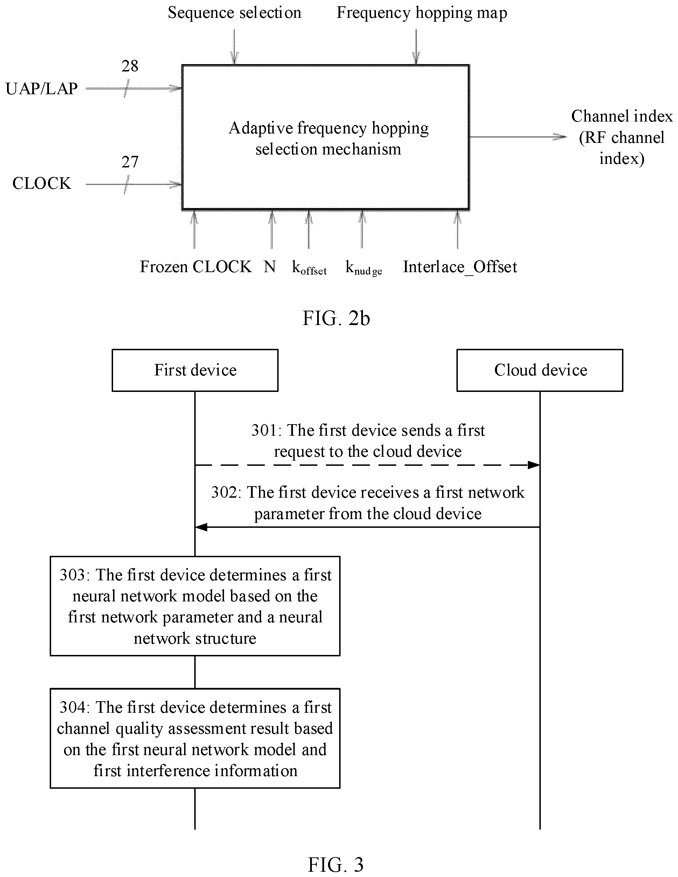

FIG. 2b is a schematic diagram of a Bluetooth frequency hopping selection mechanism according to an embodiment of this application. Currently, the adaptive frequency hopping mechanism is specified as follows: mapping from each input (for example, "CLOCK", "UAP/LAP", "sequence selection", "Frozen CLOCK", "N", "Koffset", "Knudge", "Interlace_Offset", and "AFH_channel_map" on a frequency hopping map) to a channel index (RF channel index). Currently, how to determine the frequency hopping map is not explicitly specified. To improve communication transmission performance, an embodiment of this application provides a channel quality assessment method, to obtain a more accurate channel quality assessment result by introducing a neural network model to participate in processing.

The following describes a detailed procedure of embodiments of this application with reference to the accompanying drawings. In this embodiment of this application, differentiation is performed based on performance of the first device, and may be divided into the following two parts: A. The first device may run a neural network model to perform channel quality assessment. B. The first device cannot run the neural network model to perform channel quality assessment. First, a solution in which the first device may run a neural network model to perform channel quality assessment is described.

FIG. 3 is a schematic diagram of an embodiment of a channel quality assessment method according to an embodiment of this application. The channel quality assessment method provided in this embodiment of this application includes:

301: A first device sends a first request to a cloud device.

In this embodiment, the first device sends the first request (for example, the first request is "Params_Req") to the cloud device. The first request is used to request the cloud device to deliver a first network parameter.

The first request includes at least one of the following: capability information, structure information, scenario information, or user level information. The capability information indicates that the first device supports channel quality assessment by using a neural network model. The structure information indicates the neural network structure used by the first device. The scenario information indicates a first scenario in which the first device is currently located. The user level information indicates a user level of the first device.

Specifically, the first device determines the capability information by using the following method: The first device determines, based on a computing capability (or a hardware parameter) of the first device, whether the first device supports channel quality assessment by using the neural network model. When the first device supports use of the neural network model, the capability information carried in the first request indicates that the first device supports use of the neural network model.

The structure information is related information of the neural network structure used by the first device. The structure information includes but is not limited to: a quantity of neurons at each layer in the neural network model supported by the first device, a quantity of layers of neurons in the neural network model supported by the first device, an inter-layer cascading relationship of the neural network model supported by the first device, and/or a network type at each layer in the neural network model supported by the first device.

The scenario information indicates the first scenario in which the first device is currently located. After determining location information of the first device (that is, a geographic location of the first device, for example, longitude and latitude coordinates of the first device), the first device marks, based on preset map information, the scenario information corresponding to the location information. This scenario may be understood as a channel environment. The scenario information is shown in Table 1.

**Table 1**

| Location information/ {Longitude, Latitude, Altitude} | Scenario |
|---|---|
| {x1, y1, z1} | Office |
| {x2, y2, z2} | Metro station |
| {x3, y3, z3} | Park |
| {x4, y4, z4} | Street |

For example, when location information determined by the first device is {x1, y1, z1}, the first device determines, based on the location information, that the current first scenario is an office.

The user level information indicates the user level of the first device. For example, the user level includes a VIP (VIP) user and a non-VIP user. The first device configures corresponding first network parameters for first devices of different user levels based on the user level information. For example, when the user level of the first device is a VIP user, the cloud device configures, for the first device based on the user level information, the first network parameter whose user level is the VIP user. The user level is the first network parameter of the VIP user, and has features such as stronger anti-interference performance and stronger communication transmission performance compared with the first network parameter whose user level is a non-VIP user.

The first request may further include device type information of the first device, for example, a device type of the first device and/or a device type of a second device that establishes a Bluetooth connection to the first device. This is not limited herein.

Optionally, the first device may periodically send the first request to the cloud device, for example, send the first request to the cloud device every 3 to 5 seconds or 60 seconds.

Optionally, the first device sends the first request to the cloud device when a first condition is met. The first condition includes: a packet loss rate of the first device within a time window is greater than or equal to a preset threshold when the first device performs data transmission with the second device based on a second channel quality assessment result. The second channel quality assessment result is determined by the first device based on a second neural network model and second interference information obtained by the first device through channel measurement within a second time, and the second neural network model is a neural network model determined by the first device based on a second network parameter delivered by the cloud device and the neural network structure. Before the first device receives the first network parameter from the cloud device in step 302, the first device determines the second neural network model based on the second network parameter from the cloud device.

In a possible implementation, a relationship between the second neural network model and a first neural network model in step 303 is as follows: The second neural network model is further trained in the cloud device to obtain the first neural network model.

It should be noted that step 301 is an optional step. When step 301 is not performed, the cloud device determines, based on preset information (for example, information predefined in a protocol), the first neural network model used by the first device, and performs step 302.

302: The first device receives the first network parameter from the cloud device.

In this embodiment, after the cloud device receives the first request from the first device, the cloud device determines the first network parameter of the first device based on the first request.

Specifically, one or more neural network models are configured in a cloud device, and these neural network models are applicable to different scenarios. Different neural network models are further applicable to different first devices, and different neural network models are further applicable to different pieces of user level information. These neural network models may use different neural network structures, or these neural network models may use a same neural network structure and perform adaptive optimization training for different scenarios. For example, the neural network model configured in the cloud device is shown in Table 2.

**Table 2**

| Neural network model (identifier) | Application scenario of the neural network model | Device type used by the neural network model (optional) | User level information (optional) |
|---|---|---|---|
| Neural network model A | Office | Mobile phone A | VIP |
| Neural network model B | Office | Mobile phone A | Non-VIP |
| Neural network model C | Park | Mobile phone A | Non-VIP |
| Neural network model D | Airport | Mobile phone A | Non-VIP |
| Neural network model E | Airport | Mobile phone B | Non-VIP |
| Neural network model F | Street | Mobile phone C | VIP |

After the cloud device determines, based on the first request, the neural network model that matches the first request, the cloud device sends a related parameter of the neural network model to the first device. The parameter is referred to as a first network parameter. The first network parameter includes but is not limited to: a quantity of neurons at each layer in the neural network model, a quantity of layers of neurons in the neural network model, an inter-layer cascading relationship in the neural network model, and/or a network type at each layer in the neural network model.

303: The first device determines the first neural network model based on the first network parameter and the neural network structure.

In this embodiment, the first device determines the first neural network model based on the first network parameter and the neural network structure used by the first device.

With reference to Table 2, for example, the first network parameter is a related parameter of the neural network model F, and the neural network structure used by the first device is a structure of the neural network model F. In this case, the first device determines, based on the first network parameter and the neural network structure used by the first device, that the first neural network model is the neural network model F.

In another optional implementation, a plurality of neural network models are preconfigured in the first device. After the first device determines, based on the first network parameter, the neural network model that matches the first network parameter, the first device updates a local neural network model by using the first network parameter. An updated neural network model is the first neural network model.

304: The first device determines a first channel quality assessment result based on the first neural network model and first interference information.

In this embodiment, interference information obtained by the first device through channel measurement within a first time is referred to as the first interference information. The interference information may be a received signal strength indicator (Received Signal Strength Indicator, RSSI). The interference information may alternatively be another performance indicator of a channel. This is not limited herein. For example, the interference information is a packet loss rate, a signal-to-noise ratio (SIGNAL-NOISE RATIO, SNR), or a signal to interference plus noise ratio (Signal to Interference plus Noise Ratio, SINR). In this embodiment of this application, an example in which the interference information is an RSSI is used for description. The first interference information may be one or more RSSIs, or may be an RSSI sequence formed by a plurality of RSSIs. This is not limited herein.

A time length of the first time may be adjusted based on an actual requirement. For example, the first time is 3 to 5 seconds.

After the first device obtains the first interference information, the first device processes the first interference information by using the first neural network model, to obtain the first channel quality assessment result through inference. In a Bluetooth communication scenario, the first channel quality assessment result is a frequency hopping map.

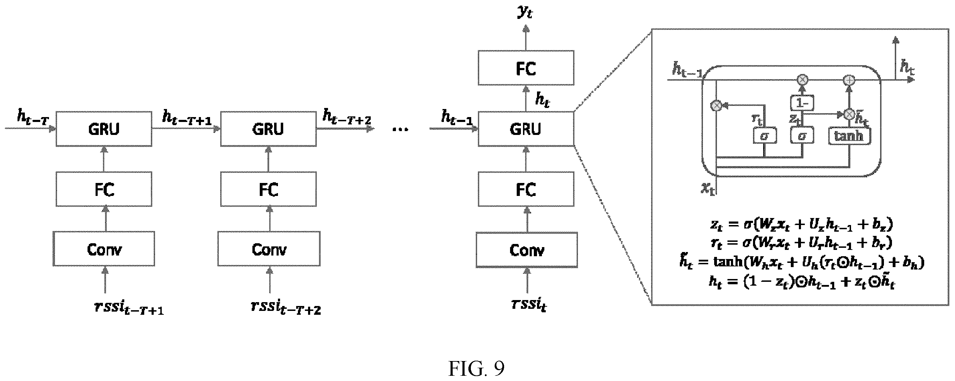

For ease of understanding, the following describes, with reference to the accompanying drawings, a neural network model (that is, the first neural network model and a second neural network model in a subsequent embodiment) used for processing interference information in embodiments of this application. FIG. 9 is a schematic diagram of a structure of a neural network model according to an embodiment of this application. It should be noted that the neural network model shown in FIG. 9 is merely descriptions of an example of an optional implementation solution in this embodiment of this application, and does not limit a specific structure of the neural network model in this embodiment of this application.

In the neural network model shown in FIG. 9, "Conv" represents a convolution layer (convolutional layer), "FC" represents a fully connected layer (fully connected layer), and "GRU" represents a gated recurrent unit (Gated recurrent unit). The GRU may be one layer, two layers, or a plurality of layers. The GRU may be replaced with a recurrent neural network (Recurrent Neural Network, RNN), a long short-term memory (Long Short-Term Memory, LSTM) network, a bidirectional long short-term memory network (Bi-directional Long Short-Term Memory, BiLSTM), or the like. This is not limited herein.

Specifically, the neural network is described from four aspects: sample data obtaining, sample data preprocessing, neural network model training, and neural network model inference.

Sample data obtaining: A Bluetooth communication scenario is used as an example, and the sample data is RSSIs collected by one or more first devices.

Sample data preprocessing: The neural network model preprocesses one or more RSSIs, to generate an RSSI sequence including RSSIs at T consecutive moments, and T is an integer greater than 0. A set of these RSSI sequences is also referred to as a sample data set. For example, T may be 3 to 5 seconds. Optionally, normalization processing may be further performed on the RSSI sequence. For example, a normalization equation is as follows: $X = \dfrac{x - x_{\min}}{x_{\max} - x_{\min}}$ . x represents an RSSI sequence in the sample data set, $x_{min}$ represents a minimum RSSI value in the sample data set, and $x_{max}$ represents a maximum RSSI value in the sample data set.

Neural network model training: An input of the neural network model is a normalized RSSI sequence at T consecutive moments, and an output of the neural network model is a channel quality assessment result (a frequency hopping map). A Bluetooth BR/EDR version is used as an example, and 79 channels are specified in the Bluetooth BR/EDR version. In this case, an output result of the neural network model is a frequency hopping map formed by 79 bits. A label is channel quality of the 79 Bluetooth channels determined based on interference information.

For example, a label of a channel i is determined based on RSSIs of the channel at S consecutive moments in the future. If a probability that the S RSSIs are greater than a threshold is greater than or equal to 0.5, the channel i is an available channel and the label of the channel i $y_t^i = 1$ . If a probability that the S RSSIs are greater than a threshold is less than 0.5, the channel i is an unavailable channel and the label of the channel i $y_t^i = 0$ . A time length of T and S is usually 3 to 5 seconds. Specifically, a quantity of used RSSI samples is determined by a sampling rate.

In a possible implementation, a loss function of the neural network model is:

$$L = -\sum_{i \in I}[w * y_t^i \log \hat{y}_t^i + (1 - y_t^i) \log(1 - \hat{y}_t^i)].$$

w represents a classification weight, and is used to resolve a sample imbalance problem, $y_t^i$ represents a label of a channel i at a moment t, $\hat{y}_t^i$ represents an assessment result of the channel i by the neural network model at the moment t, and I represents a channel set of 79 Bluetooth channels. A training objective is to minimize a loss function, and a training process is to update a neural network model parameter by using a random gradient descent method.

Neural network model inference: A trained neural network model can be used for channel quality assessment. Specifically, RSSI sequences obtained after normalization at historical T moments, that is, RSSI sequences from t-T+1 to the moment t, are sequentially input into the neural network model, to obtain the neural network output $y_t$ at the moment t.

A Bluetooth BR/EDR version is used as an example, output results of 79 channels are processed based on a neural network model, to generate a channel quality assessment result (that is, a frequency hopping map). For example, if the output results are sorted in descending order, channels corresponding to first 20 values are available channels, and the channel is set to 1 on the frequency hopping map. Alternatively, when the assessment result is greater than the threshold, the corresponding channel is an available channel, and the channel in the frequency hopping map is set to 1.

In this embodiment of this application, the cloud device determines the first network parameter corresponding to the neural network structure used by the first device. Then, the first device determines the first neural network model based on the first network parameter and the neural network structure. The first device determines the first channel quality assessment result based on the first neural network model and the first interference information. The first interference information is interference information obtained by the first device through channel measurement within the first time. The first channel quality assessment result indicates the channel quality of the channel. It can be learned that this embodiment of this application provides a channel quality assessment solution. To be specific, the first device assesses the channel based on the first neural network model and the first interference information obtained by the first device through channel measurement, to obtain the first channel quality assessment result. In this way, communication transmission may be performed between the first device and a second device connected to the first device based on the first channel quality assessment result, to improve communication transmission performance. A simulation experiment result of the technical solution of this application is shown in Table 3. Compared with a solution in the conventional technology, an average relative gain reaches 19.25%. This effectively improves anti-interference performance of the first device.

**Table 3**

| Interference data | Packet loss rate | | Relative gain (%) |
| --- | --- | --- | --- |
| | Conventional technology | Technical solution of this application | |
| 1 | 0.2958 | 0.2651 | 10.37 |
| 2 | 0.4705 | 0.4239 | 9.92 |
| 3 | 0.3349 | 0.3005 | 10.28 |
| 4 | 0.3649 | 0.3218 | 11.82 |
| 5 | 0.2419 | 0.2057 | 14.96 |
| 6 | 0.4539 | 0.2945 | 35.12 |
| 7 | 0.3606 | 0.2799 | 22.37 |
| 8 | 0.2644 | 0.2373 | 10.23 |
| 9 | 0.3034 | 0.2839 | 6.43 |
| 10 | 0.2795 | 0.1991 | 28.76 |
| 11 | 0.3308 | 0.1607 | 51.43 |
| Average value | 0.3364 | 0.2702 | 19.25 |

Based on the embodiment shown in FIG. 3, the neural network model may be further trained to obtain better performance. For ease of description, the neural network model before training is referred to as a second neural network model, and the neural network model after training is referred to as a first neural network model. Specifically, the second neural network model may be trained based on the interference information, or the second neural network model may be trained based on the channel quality assessment result. The foregoing training may be performed by the cloud device, or the foregoing training may be performed by the first device, or the foregoing training may be performed by a third device independent of the cloud device or the first device. This is not limited herein. The third device may be a node dedicated to an artificial intelligence (artificial intelligence, AI) function on a network side, a node dedicated to a model learning function, a mobile edge computing (mobile edge computing) device, a cloud server, or the like. This is not limited. A reference signal pool learned by the third device may be agreed on in a protocol after offline learning, or may be sent to the first device through an interface between the third device and the cloud device, or may be directly sent to the first device by the third device, or may be forwarded to the first device by using another network element B. This is not limited. The third device may also be referred to as an AI node, an intelligent node, a model training node, or another name. This is not limited.

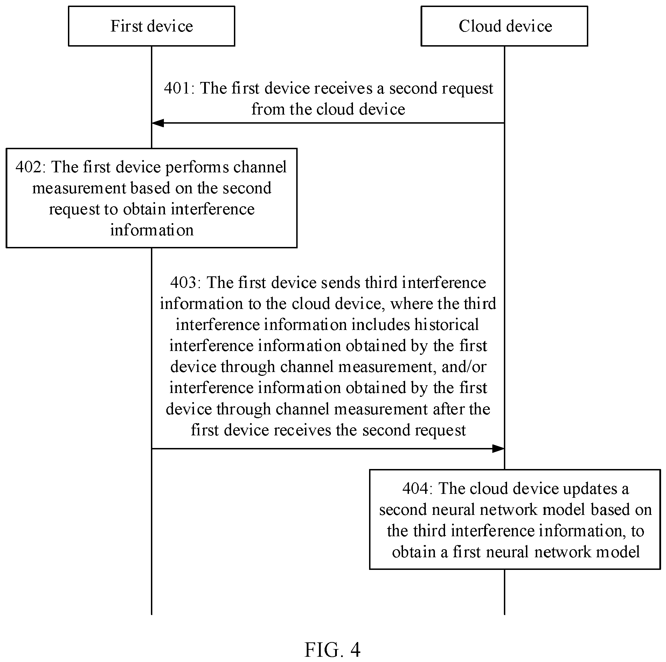

In this embodiment of this application, for ease of description, an example in which the cloud device performs the foregoing training is used for description. First, training the second neural network model by the cloud device based on the interference information is described. FIG. 4 is a schematic diagram of another embodiment of the channel quality assessment method according to an embodiment of this application. The channel quality assessment method provided in this embodiment of this application includes:

401: The first device receives a second request from the cloud device.

In this embodiment, before the cloud device sends first network information to the first device (the foregoing step 302), the first device performs data transmission with the second device based on the second channel quality assessment result. The second channel quality assessment result is determined by the first device based on the second neural network model and second interference information obtained by the first device through channel measurement within a second time, and the second neural network model is a neural network model determined by the first device based on a second network parameter delivered by the cloud device and the neural network structure.

In a possible implementation, when the cloud device needs to update the second neural network model, the cloud device sends the second request to the first device. The second request indicates the first device to obtain interference information through measurement. The cloud device trains the second neural network model based on the interference information, and the neural network model obtained through training is referred to as the first neural network model. Optionally, the cloud device periodically sends the second request to the first device. For example, the cloud device sends the second request to the first device once every 30 or 60 seconds.

In another possible implementation, before step 401, the first device actively sends an interference information report request to the cloud device, and the cloud device sends a second request to the first device based on the report request. In this way, the first device actively reports the interference information of the second neural network model.

402: The first device performs channel measurement based on the second request to obtain the interference information.

In this embodiment, the first device performs channel measurement based on the second request to obtain the interference information.

Specifically, the interference information is an RSSI (or an RSSI sequence). It should be noted that the interference information may alternatively be another parameter (or indicator) indicating channel quality. This is not limited herein.

403: The first device sends third interference information to the cloud device, where the third interference information includes historical interference information obtained by the first device through channel measurement, and/or interference information obtained by the first device through channel measurement after the first device receives the second request.

In this embodiment, the first device sends third interference information to the cloud device, where the third interference information includes historical interference information obtained by the first device through channel measurement (that is, interference information obtained through measurement before step 401), and/or interference information obtained by the first device through channel measurement after the first device receives the second request. For example, a format of the third interference information is shown in Table 4.

Table 4

| Channel index (Channel_index) | RSSI at a moment 1 (RSSI_1) | ... | RSSI at a moment t (RSSI_t) |
|---|---|---|---|
| 0 | -88 | ... | -86 |
| 1 | -90 | ... | -93 |
| ⋮ | ⋮ | ... | ⋮ |
| 78 | -65 | ... | -62 |

Optionally, the third interference information may be an RSSI, or may be a processed RSSI. For example, an RSSI average value or an RSSI residual obtained through compression processing. Alternatively, the third interference information may be an average value of RSSIs that are obtained by the first device through measurement, and a difference between each RSSI and the average value. For example, RSSIs of a channel obtained by the first device through measurement are {-88, -89, -85, -93, -95}. The average value is -90, and differences between each RSSI and the average value are {2, 1, 5, -3, -5}. The third interference information sent by the first device to the cloud device is an average value {-90}, and differences between each RSSI and the average value are {2, 1, 5, -3, -5}.

404: The cloud device updates the second neural network model based on the third interference information, to obtain the first neural network model.

In this embodiment, the cloud device updates and trains the second neural network model based on the third interference information, and obtains the first neural network model through training. The related parameter of the first neural network model is sent to the first device by using the first network information. For example, content shown in the foregoing steps 302 to 303 is included.

In this embodiment of this application, the cloud device may obtain the interference information from the first device. The cloud device trains the neural network model in the cloud based on the interference information, to improve performance of the neural network model. This further improves communication performance.

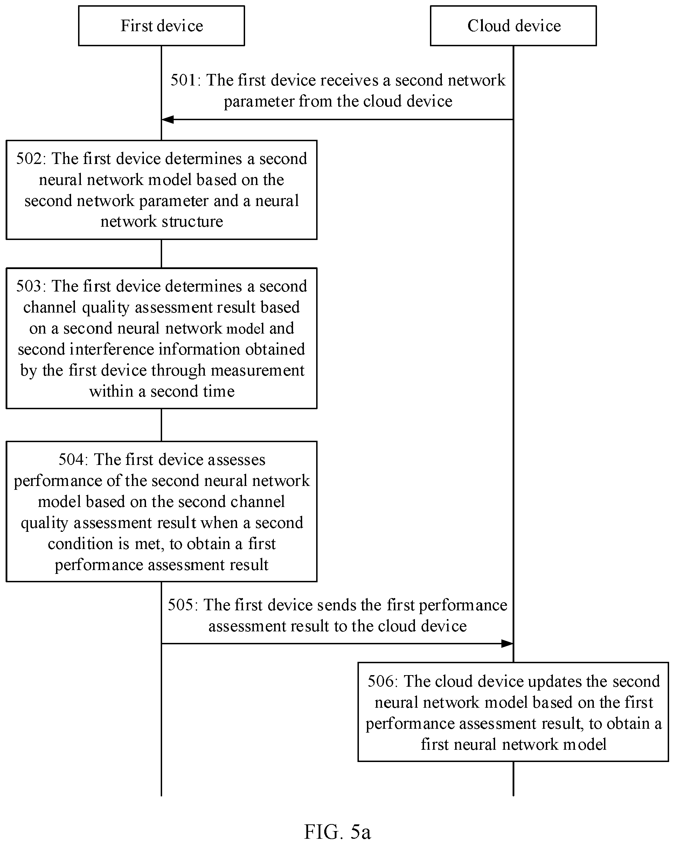

Second, training the second neural network model by the cloud device based on the assessment result is described. FIG. 5a is a schematic diagram of still another embodiment of the channel quality assessment method according to an embodiment of this application. The channel quality assessment method provided in this embodiment of this application includes:

501: The first device receives a second network parameter from the cloud device.

In this embodiment, the cloud device may determine a matched neural network model for the first device based on a request message of the first device (similar to the first request in step 301). The cloud device sends a related parameter of the neural network model to the first device. The parameter is referred to as a second network parameter. The second network parameter includes but is not limited to: a quantity of neurons at each layer in the neural network model, a quantity of layers of neurons in the neural network model, an inter-layer cascading relationship in the neural network model, and/or a network type at each layer in the neural network model.

Alternatively, the cloud device may directly send the second network parameter to the first device, to configure the second neural network model for the first device.

502: The first device determines the second neural network model based on the second network parameter and the neural network structure.

In this embodiment, this step is similar to step 303. Details are not described herein again.

503: The first device determines a second channel quality assessment result based on the second neural network and second interference information obtained by the first device through measurement within a second time.

In this embodiment, the interference information obtained by the first device through channel measurement within the second time is referred to as second interference information. The interference information may be a received signal strength indicator (Received Signal Strength Indicator, RSSI). The interference information may alternatively be another performance indicator of a channel. This is not limited herein. In this embodiment of this application, an example in which the interference information is an RSSI is used for description. The second interference information may be one or more RSSIs, or may be an RSSI sequence formed by a plurality of RSSIs. This is not limited herein.

A time length of the second time may be adjusted based on an actual requirement. For example, the second time is 3 to 5 seconds.

After the first device obtains the second interference information, the first device processes the second interference information by using the second neural network model, to obtain the second channel quality assessment result through inference. In a Bluetooth communication scenario, the second channel quality assessment result is a frequency hopping map.

504: The first device assesses performance of the second neural network model based on the second channel quality assessment result when a second condition is met, to obtain the first performance assessment result.

In this embodiment, that the first device assesses performance of the second neural network model is specifically as follows: When the first device performs communication transmission with the second device based on the second channel quality assessment result, the first device collects statistics on a packet loss rate of communication between the first device and the second device within a time window.

The second condition is that the packet loss rate is greater than a historical minimum packet loss rate (the packet loss rate of communication between the first device and the second device). When the second condition is met, the first device determines that performance of the current second neural network model is inferior to performance of a historically used neural network model. First, the first device determines a parameter of a neural network model corresponding to the historical minimum packet loss rate. Then, the first device notifies the cloud device of the parameter of the neural network model corresponding to the historical minimum packet loss rate and/or an indication of poor performance of the second neural network model by using a message. The message is referred to as a first performance assessment result.

A length of the time window may be determined based on an actual requirement, for example, 3 to 5 seconds. This is not limited herein.

In another optional implementation, the first device periodically (for example, every 3 to 5 seconds) sends the packet loss rate to the cloud device within the time window. The cloud device detects whether the packet loss rate is greater than the historical minimum packet loss rate of the first device. When the packet loss rate is greater than the historical minimum packet loss rate of the first device, the cloud device determines the parameter of the neural network model corresponding to the historical minimum packet loss rate. The cloud device updates the second neural network model in the cloud based on the parameter, to obtain the first neural network model through training. In this implementation, after step 504, step 505 is not performed, and step 506 is performed.

505: The first device sends the first performance assessment result to the cloud device.

In this embodiment, the first performance assessment result may be represented by using an adaptive frequency hopping channel map.

506: The cloud device updates the second neural network model based on the first performance assessment result, to obtain the first neural network model.

In this embodiment, the cloud device determines, based on the first performance assessment result, that the second neural network model needs to be updated. The cloud device updates the second neural network model based on the parameter that is of the neural network model corresponding to the historical minimum packet loss rate and that is carried in the first performance assessment result, to obtain the first neural network model.

In this embodiment of this application, when the first device determines that performance of the currently used second neural network model is poor, the first device may send the first performance assessment result to the cloud device. The first performance assessment result carries the parameter of the neural network model corresponding to the historical minimum packet loss rate of the first device. The cloud device updates the second neural network model based on the first performance assessment result, and obtains the first neural network model through training. This can improve performance of the neural network model, and further improve communication performance.

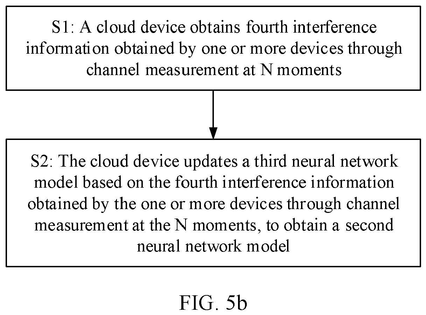

Based on the foregoing embodiment, the cloud device may further collect statistics about interference information of a plurality of first devices, and train the neural network model based on the interference information. For first devices of different user levels, the cloud device may provide neural network models with different performance requirements. Specifically, FIG. 5b is a schematic diagram of still another embodiment of the channel quality assessment method according to an embodiment of this application. The channel quality assessment method provided in this embodiment of this application includes:

S1: The cloud device obtains fourth interference information obtained by one or more devices through channel measurement at N moments.

In step S1, the cloud device obtains the fourth interference information obtained by the one or more devices (the first device) through channel measurement at the N moments, and N is a positive integer. The fourth interference information may be an RSSI.

Optionally, the cloud device classifies the obtained fourth interference information based on different device types of the first device. For example, the cloud device obtains fourth interference information obtained by one or more first-type devices through measurement at N moments.

S2: The cloud device updates a third neural network model based on the fourth interference information obtained by the one or more devices through channel measurement at the N moments, to obtain the second neural network model.

In step S2, the cloud device updates the third neural network model based on the fourth interference information obtained by the one or more devices through channel measurement at the N moments, to obtain the second neural network model.

Optionally, the cloud device updates the third neural network model based on fourth interference information obtained by the one or more first-type devices through measurement at the N moments, to obtain the second neural network model, where N is an integer greater than or equal to 1.

In an implementation, for different types of devices (the first device), the cloud device updates and trains the third neural network model based on fourth interference information from different sources, to obtain the second neural network model. For example, for a first-type device, the cloud device updates and trains the third neural network model based on fourth interference information from the first-type device, to obtain the second neural network model. For a second-type device, the cloud device updates and trains the third neural network model based on fourth interference information from the second-type device, to obtain the second neural network model.

The cloud device sends, based on device type information carried in the first request reported by the first device, a network parameter of a corresponding neural network model to the first device. For example, when the first request reported by the first device indicates that the first device is the first-type device, the neural network model corresponding to the network parameter delivered by the cloud device is a neural network model obtained through training based on the fourth interference information reported by the first-type device.

In another implementation, for first devices of different user levels, the cloud device updates and trains the third neural network model based on fourth interference information that is from different sources and that has different quantities of samples, to obtain the second neural network model. For example, for a first-type device of a non-VIP device, the cloud device updates and trains the third neural network model based on fourth interference information whose quantity of samples is 5000, to obtain the second neural network model. The fourth interference information is from the first-type device. For a first-type device of a VIP device, the cloud device updates and trains the third neural network model based on fourth interference information whose quantity of samples is 50000, to obtain the second neural network model. The fourth interference information is from the first-type device. For a non-VIP second-type device, the cloud device updates and trains the third neural network model based on fourth interference information whose quantity of samples is 20000, to obtain the second neural network model. The fourth interference information is from the second-type device.

In this embodiment of this application, for first devices of different types and first devices of different user levels, the cloud device may perform differentiation training on the neural network model. This can adapt to different service scenarios and meet differentiated communication performance requirements of users.

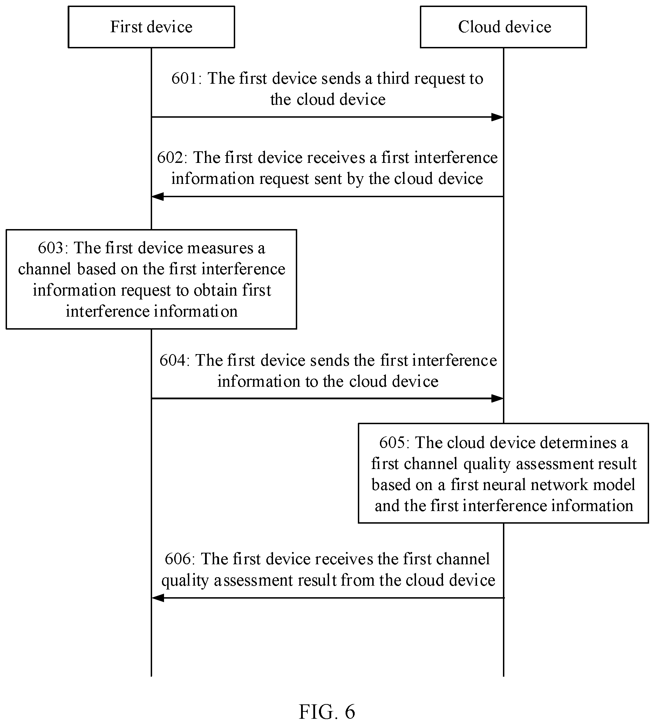

Second, a solution in which the first device cannot run the neural network model to perform channel quality assessment is described. FIG. 6 is a schematic diagram of still another embodiment of the channel quality assessment method according to an embodiment of this application. The channel quality assessment method provided in this embodiment of this application includes:

601: The first device sends a third request to the cloud device.

In this embodiment, the first device sends the third request to the cloud device. The third request is used to request a channel quality assessment result of a channel.

The third request includes at least one of the following: capability information, delivery manner information, scenario information, or user level information. The capability information indicates that the first device does not support channel quality assessment by using a neural network model; the delivery manner information indicates a delivery manner of the first channel quality assessment result; the scenario information indicates a first scenario in which the first device is currently located; and the user level information indicates a user level of the first device. The third request is similar to the first request in step 301, and details are not described herein again.

602: The first device receives a first interference information request sent by the cloud device.

In this embodiment, after the cloud device receives the third request, the cloud device sends the first interference information request to the first device. The first device receives the first interference information request sent by the cloud device.

603: The first device measures the channel based on the first interference information request to obtain the first interference information.

In this embodiment, the first device measures the channel based on the first interference information request, to obtain the first interference information.

Specifically, interference information obtained by the first device through channel measurement within a first time is referred to as the first interference information. The interference information may be a received signal strength indicator (Received Signal Strength Indicator, RSSI). The interference information may alternatively be another performance indicator of a channel. This is not limited herein. In this embodiment of this application, an example in which the interference information is an RSSI is used for description. The first interference information may be one or more RSSIs, or may be an RSSI sequence formed by a plurality of RSSIs. This is not limited herein.

A time length of the first time may be adjusted based on an actual requirement. For example, the first time is 3 to 5 seconds.

604: The first device sends the first interference information to the cloud device.

In this embodiment, the first device sends the first interference information to the cloud device based on the first interference information request.

605: The cloud device determines the first channel quality assessment result based on the first neural network model and the first interference information.

In this embodiment, after the cloud device obtains the first interference information, the cloud device processes the first interference information by using the first neural network model, to obtain the first channel quality assessment result through inference. In a Bluetooth communication scenario, the first channel quality assessment result is a frequency hopping map.

606: The first device receives the first channel quality assessment result from the cloud device.

In this embodiment, the cloud device determines, based on the third request, that the first device does not support channel quality assessment by using the neural network model. Therefore, the cloud device sends the first channel quality assessment result to the first device.

In this embodiment of this application, when the first device does not support channel quality assessment by using the neural network model, the cloud device performs processing by using the first neural network model based on the first interference information uploaded by the first device, to obtain the first channel quality assessment result through inference. Then, after receiving the first channel quality assessment result, the first device communicates with the second device based on the first channel quality assessment result. It can be learned that this embodiment of this application provides a channel quality assessment solution. To be specific, the cloud device assesses the channel based on the first neural network model and the first interference information obtained by the first device through channel measurement, to obtain the first channel quality assessment result. The cloud device sends the first channel quality assessment result to the first device. In this way, communication transmission may be performed between the first device and the second device connected to the first device based on the first channel quality assessment result, to improve communication transmission performance and anti-interference performance of the first device.

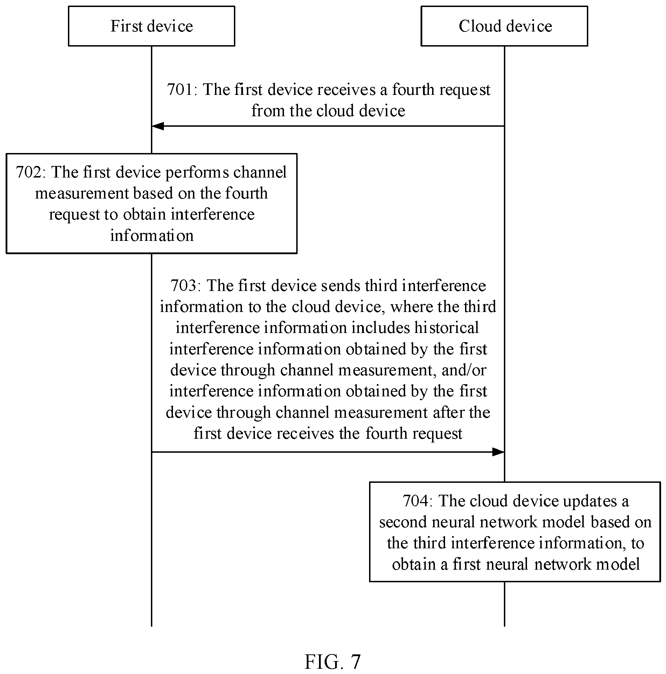

Similar to embodiments shown in FIG. 4 to FIG. 5b, the neural network model may be further trained to obtain better performance. For ease of description, the neural network model before training is referred to as a second neural network model, and the neural network model after training is referred to as a first neural network model. Specifically, the second neural network model may be trained based on the interference information, or the second neural network model may be trained based on the channel quality assessment result. The foregoing training may be performed by the cloud device, or the foregoing training may be performed by the third device. In this embodiment of this application, for ease of description, an example in which the cloud device performs the foregoing training is used for description. First, training the second neural network model by the cloud device based on the interference information is described. FIG. 7 is a schematic diagram of still another embodiment of the channel quality assessment method according to an embodiment of this application. The channel quality assessment method provided in this embodiment of this application includes:

701: The first device receives a fourth request from the cloud device.

In this embodiment, before step 606 (before the first device receives the first channel quality assessment result from the cloud device), the first device performs data transmission with the second device based on the second channel quality assessment result. The second channel quality assessment result is determined by the first device based on the second neural network model and second interference information obtained by the first device through channel measurement within a second time, and the second neural network model is a neural network model determined by the first device based on a second network parameter delivered by the cloud device and the neural network structure.

In a possible implementation, when the cloud device needs to update the second neural network model, the cloud device sends the fourth request to the first device. The fourth request indicates the first device to obtain interference information through measurement. The cloud device trains the second neural network model based on the interference information, and the neural network model obtained through training is referred to as the first neural network model. Optionally, the cloud device periodically sends the fourth request to the first device. For example, the cloud device sends the fourth request to the first device once every 30 or 60 seconds.

In another possible implementation, before step 701, the first device actively sends an interference information report request to the cloud device, and the cloud device sends a fourth request to the first device based on the report request. In this way, the first device actively reports the interference information of the second neural network model.

702: The first device performs channel measurement based on the fourth request to obtain the interference information.

In this embodiment, the first device performs channel measurement based on the fourth request to obtain the interference information.

Specifically, the interference information is an RSSI (or an RSSI sequence). It should be noted that the interference information may alternatively be another parameter (or indicator) indicating channel quality. This is not limited herein.

703: The first device sends third interference information to the cloud device, where the third interference information includes historical interference information obtained by the first device through channel measurement, and/or interference information obtained by the first device through channel measurement after the first device receives the fourth request.

704: The cloud device updates the second neural network model based on the third interference information, to obtain the first neural network model.

Steps 703 and 704 are similar to steps 403 and 404, and details are not described herein again.

In this embodiment of this application, the cloud device may obtain the interference information from the first device. The cloud device trains the neural network model in the cloud based on the interference information, to improve performance of the neural network model. This further improves communication performance.

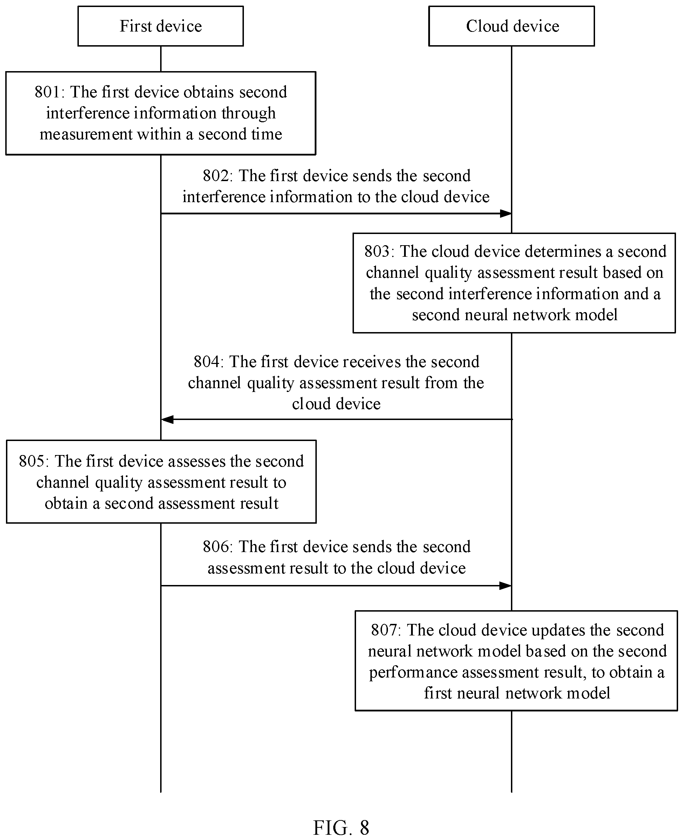

Second, training the second neural network model by the cloud device based on the assessment result is described. FIG. 8 is a schematic diagram of still another embodiment of the channel quality assessment method according to an embodiment of this application. The channel quality assessment method provided in this embodiment of this application includes:

801: The first device obtains second interference information through measurement within a second time.

In this embodiment, specifically, the interference information obtained by the first device through channel measurement within the second time is referred to as second interference information. The interference information may be a received signal strength indicator (Received Signal Strength Indicator, RSSI). The interference information may alternatively be another performance indicator of a channel. This is not limited herein. In this embodiment of this application, an example in which the interference information is an RSSI is used for description. The second interference information may be one or more RSSIs, or may be an RSSI sequence formed by a plurality of RSSIs. This is not limited herein.

A time length of the second time may be adjusted based on an actual requirement. For example, the second time is 3 to 5 seconds.

802: The first device sends the second interference information to the cloud device.

803: The cloud device determines a second channel quality assessment result based on the second interference information and a second neural network model.

In this embodiment, after the cloud device obtains the second interference information, the cloud device processes the second interference information by using the second neural network model, to obtain the second channel quality assessment result through inference. In a Bluetooth communication scenario, the second channel quality assessment result is a frequency hopping map.

804: The first device receives the second channel quality assessment result from the cloud device.

In this embodiment, when the cloud device learns that the first device does not support channel quality assessment by using the neural network model, the cloud device sends the second channel quality assessment result to the first device.

805: The first device assesses the second channel quality assessment result to obtain a second assessment result.

In this embodiment, after the first device receives the second channel quality assessment result, the first device assesses the second channel quality assessment result.

Optionally, the first device assesses the second channel quality assessment result by measuring a packet loss rate within a specific time window. Specifically, the first device communicates with the second device based on the second channel quality assessment result, and measures a packet loss rate within a specific time window. The packet loss rate is the second assessment result. The first device may assess the second channel quality assessment result by using another communication quality indicator. This is not limited herein.

In another optional implementation, the first device collects statistics on a historical minimum packet loss rate. When the first device uses the second channel quality assessment result, the first device periodically measures a packet loss rate within a specific time window. The first device detects the packet loss rate and the historical minimum packet loss rate. When the packet loss rate is greater than the historical minimum packet loss rate, the first device determines that performance of the currently used second channel quality assessment result is poor, and generates a second assessment result. The second assessment result indicates that performance of the second channel quality assessment result is poor. The cloud device updates the second neural network model based on the second assessment result.

806: The first device sends the second assessment result to the cloud device.

807: The cloud device updates the second neural network model based on the second performance assessment result, to obtain the first neural network model.

In this embodiment, an example in which the second assessment result is a packet loss rate is used. Optionally, the cloud device assesses performance of the current second neural network model by comparing the second assessment result with the historical minimum packet loss rate. When the packet loss rate is greater than the historical minimum packet loss rate (the historical minimum packet loss rate is a minimum packet loss rate historically uploaded by the first device), the cloud device determines a neural network model corresponding to the historical minimum packet loss rate, and updates and trains the second neural network model by using the neural network model, to obtain the first neural network model through training.

Alternatively, when the packet loss rate is greater than the historical minimum packet loss rate (the historical minimum packet loss rate is a minimum packet loss rate historically uploaded by the first device), the cloud device continues to train the second neural network model, to obtain the first neural network model through training.

In this embodiment of this application, the cloud device determines the performance of the currently used second neural network model based on the second performance assessment result reported by the first device. When the performance of the second neural network model is poor, the cloud device may continue to obtain the first neural network model through training. This can improve performance of the neural network model, and further improve communication performance.

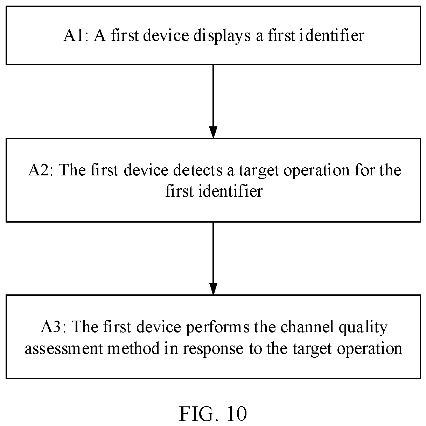

With reference to the foregoing embodiments, an embodiment of this application further provides an interaction embodiment of a channel quality assessment method. FIG. 10 is a schematic diagram of an interaction embodiment of a channel quality assessment method according to an embodiment of this application. The method specifically includes the following steps.

A1: A first device displays a first identifier.

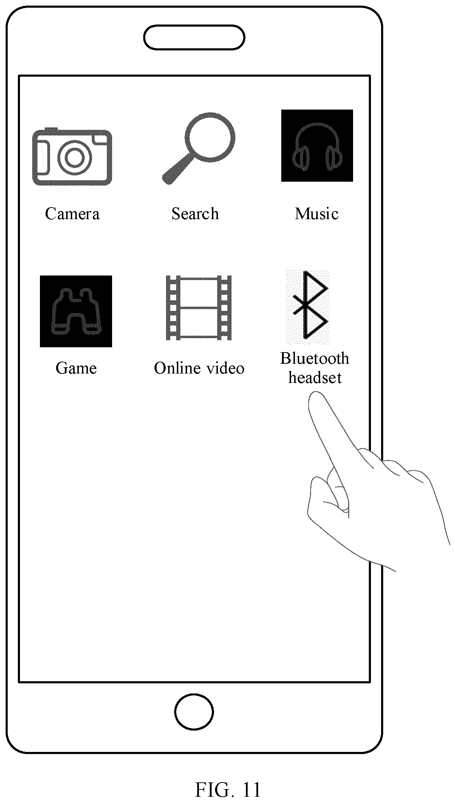

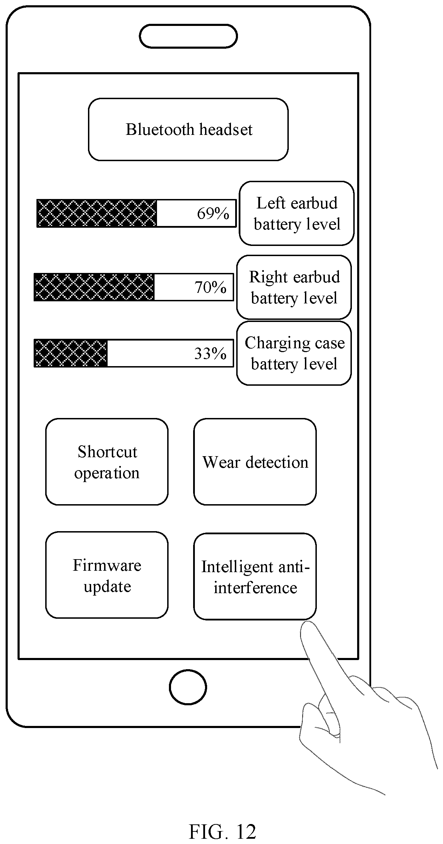

In this embodiment, for example, FIG. 11 is a schematic diagram of an interface according to an embodiment of this application. After a user taps or presses for a period of time to trigger an operation instruction for a "Bluetooth headset" icon in FIG. 11, the first device displays a menu interface of the "Bluetooth headset". As shown in FIG. 12, FIG. 12 is a schematic diagram of still another interface according to an embodiment of this application.

In the interface shown in FIG. 12, "intelligent anti-interference" is the first identifier.

A2: The first device detects a target operation for the first identifier.

In this embodiment, in an optional implementation, the first device detects, by detecting a sensor of a display screen, whether there is a target operation for the first identifier. For example, when the user taps or presses for a period of time, an operation instruction for the first identifier ("intelligent anti-interference") is triggered, that is, the first device detects that there is a target operation for the first identifier.

A3: The first device performs the channel quality assessment method in response to the target operation.

In this embodiment, the first device performs the foregoing channel quality assessment method in response to the target operation. Details are not described herein again.

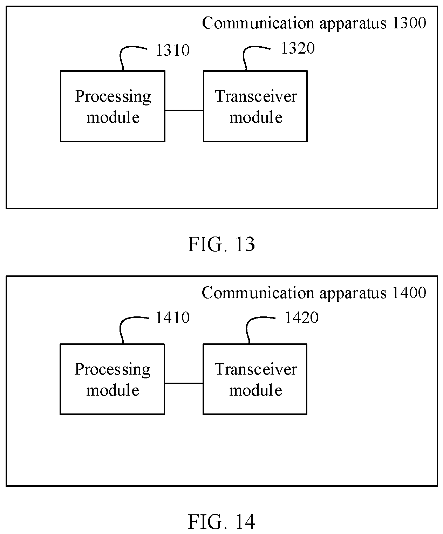

FIG. 13 is a schematic diagram of a communication apparatus according to an embodiment of this application. The communication apparatus 1300 includes a processing module 1310 and a transceiver module 1320.

The processing module 1310 is configured to determine a first network parameter corresponding to a neural network structure used by a first device.

The processing module 1310 is further configured to determine a first neural network model based on the first network parameter and the neural network structure.

The processing module 1310 is further configured to determine a first channel quality assessment result based on the first neural network model and first interference information. The first interference information is interference information obtained by the first device through channel measurement within a first time, and the first channel quality assessment result indicates channel quality of a channel.

In an implementation, the communication apparatus further includes the transceiver module 1320.

The transceiver module 1320 is configured to send a first request to a cloud device. The first request is used to request the cloud device to deliver the first network parameter.

The transceiver module 1320 is further configured to receive the first network parameter from the cloud device.

In an implementation, the first request includes at least one of the following: capability information, structure information, scenario information, or user level information.

The capability information indicates that the first device supports channel quality assessment by using a neural network model.

The structure information indicates the neural network structure used by the first device.

The scenario information indicates a first scenario in which the first device is currently located.

The user level information indicates a user level of the first device.

In an implementation, the first network parameter is a network parameter corresponding to the neural network structure used by the first device when the first device is in the first scenario.

In an implementation, the transceiver module 1320 is further configured to send the first request to the cloud device when a first condition is met.

The first condition includes: a packet loss rate of the first device within a time window is greater than or equal to a preset threshold when the first device performs data transmission with a second device based on a second channel quality assessment result.

The second channel quality assessment result is determined by the first device based on the second neural network model and second interference information obtained by the first device through channel measurement within a second time, and the second neural network model is a neural network model determined by the first device based on a second network parameter delivered by the cloud device and the neural network structure.

In an implementation, the processing module 1310 is further configured to assess performance of a second neural network model, to obtain a first performance assessment result. The second neural network model is a neural network model determined by the first device based on a second network parameter delivered by a cloud device and the neural network structure.

The transceiver module 1320 is further configured to send the first performance assessment result to the cloud device.

The transceiver module 1320 is further configured to receive the first network parameter sent by the cloud device. The first network parameter is a network parameter obtained by the cloud device through adjustment based on the first performance assessment result and the second neural network model.

In an implementation, the processing module 1310 is further configured to assess the performance of the second neural network model when a second condition is met, to obtain the first performance assessment result.

The second condition includes: a packet loss rate of the first device within a time window is greater than a historical minimum packet loss rate when the first device performs communication transmission with the second device based on a second channel quality assessment result, and the second channel quality assessment result is a channel quality assessment result determined by the first device based on the second neural network model and second interference information obtained by the first device through channel measurement within a second time.

In an implementation, the transceiver module 1320 is further configured to receive a second request from a cloud device. The second request is used to request the first device to report interference information obtained through channel measurement.

The transceiver module 1320 is further configured to send third interference information to the cloud device. The third interference information includes historical interference information obtained by the first device through channel measurement, and/or interference information obtained by the first device through channel measurement after the first device receives the second request.

The transceiver module 1320 is further configured to receive the first network parameter sent by the cloud device. The first network parameter is a network parameter obtained by the cloud device by updating a second neural network model of the cloud device based on the third interference information.

In an implementation, the first channel quality assessment result is represented by using an adaptive frequency hopping channel map.

FIG. 14 is a schematic diagram of a communication apparatus according to an embodiment of this application. The communication apparatus 1400 includes a processing module 1410 and a transceiver module 1420.

The processing module 1410 is configured to determine a first network parameter corresponding to a neural network structure used by a first device.

The transceiver module 1420 is configured to send the first network parameter to the first device. The first network parameter is used by the first device to determine a first neural network model based on the neural network structure.

In an implementation, the transceiver module 1420 is further configured to receive a first request from the first device. The first request is used to request the first network parameter corresponding to the neural network structure.

In an implementation, the first request includes at least one of the following: capability information, structure information, scenario information, or user level information.

The capability information indicates that the first device supports channel quality assessment by using a neural network model.

The structure information indicates the neural network structure used by the first device.

The scenario information indicates a first scenario in which the first device is currently located.

The user level information indicates a user level of the first device.

In an implementation, the first network parameter is a network parameter corresponding to a neural network model structure used by the first device when the first device is in a first scenario.

In an implementation, the transceiver module 1420 is further configured to receive a first performance assessment result sent by the first device. The first performance assessment result is a first performance assessment result obtained by the first device by assessing performance of a second neural network model, and the second neural network model is a neural network model determined by a cloud device based on a second network parameter and the neural network structure.

That the processing module 1410 is further configured to determine a first network parameter corresponding to a neural network structure used by a first device includes:

the processing module 1410 is further configured to update the second neural network model based on the first performance assessment result, to obtain the first neural network model; and

the processing module 1410 is further configured to determine the first network parameter corresponding to the first neural network model.

In an implementation, the transceiver module 1420 is further configured to send a second request to the first device. The second request is used to request the first device to report interference information obtained through channel measurement.

The transceiver module 1420 is further configured to receive third interference information from the first device. The third interference information includes historical interference information obtained by the first device through channel measurement, and/or interference information obtained by the first device through channel measurement after the first device receives the second request.

That the processing module 1410 is configured to determine a first network parameter corresponding to a neural network structure used by a first device includes:

the processing module 1410 updates a second neural network model based on the third interference information, to obtain the first neural network model; and
the processing module 1410 determines the first network parameter corresponding to the first neural network model.

In an implementation, the transceiver module 1420 is further configured to obtain fourth interference information obtained by one or more devices through channel measurement at N moments.

The processing module 1410 is further configured to update a third neural network model based on the fourth interference information obtained by the one or more devices through measurement at the N moments, to obtain the second neural network model. N is an integer greater than or equal to 1.

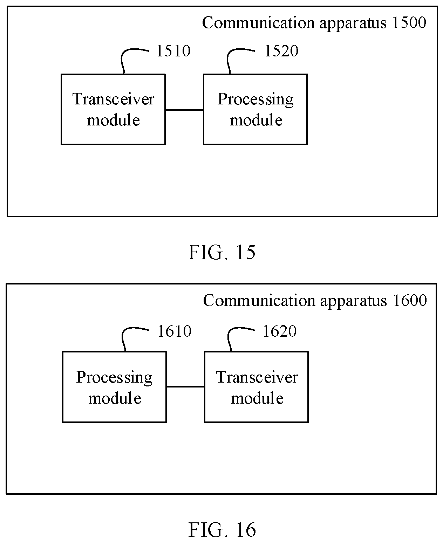

FIG. 15 is a schematic diagram of a communication apparatus according to an embodiment of this application. The communication apparatus 1500 includes a transceiver module 1510 and a processing module 1520.

The transceiver module 1510 is configured to receive a first channel quality assessment result from a cloud device. The first channel quality assessment result is determined by the cloud device based on first interference information and a first neural network model, the first channel quality assessment result indicates channel quality of a channel, and the first interference information is interference information obtained by the first device through channel measurement within a first time.

In an implementation, the transceiver module 1510 is further configured to send a third request to the cloud device. The third request is used to request a channel quality assessment result of the channel.

In an implementation, the third request includes at least one of the following: capability information, delivery manner information, scenario information, or user level information.

The capability information indicates that the first device does not support channel quality assessment by using a neural network model.

The delivery manner information indicates a delivery manner of the first channel quality assessment result.

The scenario information indicates a first scenario in which the first device is currently located.

The user level information indicates a user level of the first device.

In an implementation, the first neural network model is a neural network model corresponding to the first scenario.

In an implementation, the first channel quality assessment result is represented by using an adaptive frequency hopping channel map.

In an implementation, the transceiver module 1510 is further configured to receive a first interference information request from the cloud device. The first interference information request is used to request the first device to measure a channel and report obtained interference information.

The transceiver module 1510 is further configured to send first interference information to the cloud device. The first interference information is interference information obtained by the first device through channel measurement within a first time after receiving the first interference information request.

In an implementation, the processing module 1520 is configured to assess a second channel quality assessment result to obtain a second assessment result. The second channel quality assessment result is a channel quality assessment result determined by the cloud device based on the second interference information obtained by the first device through channel measurement within a second time and a second neural network model.

The transceiver module 1510 is further configured to send the second assessment result to the cloud device. The second assessment result is used by the cloud device to update the second neural network model to obtain the first neural network model.

In an implementation, the transceiver module 1510 is further configured to receive a fourth request from the cloud device. The fourth request is used to request the first device to report the interference information obtained by the first device through measurement.

The transceiver module 1510 is further configured to send third interference information to the cloud device. The third interference information includes historical interference information obtained by the first device through channel measurement, and/or interference information obtained by the first device through channel measurement after the first device receives the fourth request, and the third interference information is used by the cloud device to update the second neural network model to obtain the first neural network model.

FIG. 16 is a schematic diagram of a communication apparatus according to an embodiment of this application. The communication apparatus 1600 includes a processing module 1610 and a transceiver module 1620.

The processing module 1610 is configured to determine first interference information. The first interference information is interference information obtained by a first device through channel measurement within a first time.

The processing module 1610 is further configured to determine a first channel quality assessment result based on the first interference information and a first neural network model. The first channel quality assessment result indicates channel quality of a channel.

The transceiver module 1620 is configured to send the first channel quality assessment result to the first device.

In an implementation, the transceiver module 1620 is further configured to receive a third request from the first device. The third request is used to request a channel quality assessment result of the channel.

In an implementation, the third request includes at least one of the following: capability information, delivery manner information, scenario information, or user level information.

The capability information indicates that the first device does not support channel quality assessment by using a neural network model.

The delivery manner information indicates a delivery manner of the first channel quality assessment result.

The scenario information indicates a first scenario in which the first device is currently located.

The user level information indicates a user level of the first device.

In an implementation, the first neural network model is a neural network model corresponding to the first scenario.

In an implementation, the first channel quality assessment result is represented by using an adaptive frequency hopping channel map.

In an implementation, the transceiver module 1620 is further configured to send a first interference information request to the first device. The first interference information request is used to request the first device to measure a channel and report obtained interference information.

The transceiver module 1620 is further configured to receive the first interference information from the first device.

In an implementation, the transceiver module 1620 is further configured to receive a second assessment result of the first device. The second assessment result is an assessment result obtained by the first device by assessing a second channel quality assessment result, and the second channel quality assessment result is a channel quality assessment result determined by a cloud device based on second interference information obtained by the first device through channel measurement within a second time and a second neural network model.

The processing module 1610 is further configured to adjust the second neural network model based on the second assessment result, to obtain the first neural network model.

In an implementation, the transceiver module 1620 is further configured to send a fourth request to the first device. The fourth request is used to request the first device to measure a channel and report obtained interference information.

The transceiver module 1620 is further configured to receive third interference information from the first device. The third interference information includes historical interference information obtained by the first device through channel measurement, and/or interference information obtained by the first device through channel measurement after the first device receives the fourth request.

The processing module 1610 is further configured to update a second neural network model based on the third interference information, to obtain the first neural network model.

In an implementation, the transceiver module 1620 is further configured to obtain fourth interference information obtained by one or more devices through channel measurement at N moments.

The processing module 1610 is further configured to update a third neural network model based on the fourth interference information obtained by the one or more devices on a channel at the N moments, to obtain the second neural network model. N is an integer greater than or equal to 1.

In an implementation, the transceiver module 1620 is further configured to obtain fourth interference information obtained by one or more first-type devices through channel measurement at N moments.

The processing module 1610 is further configured to update a third neural network model based on the fourth interference information obtained by the one or more first-type devices on a channel at N moments, to obtain the second neural network model. N is an integer greater than or equal to 1.

It may be clearly understood by persons skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a floppy disk, or a compact disc.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

**Claims**

1. A channel quality assessment method, wherein the method comprises:

   determining, by a first device, a first network parameter corresponding to a neural network structure used by the first device;

determining, by the first device, a first neural network model based on the first network parameter and the neural network structure; and

determining, by the first device, a first channel quality assessment result based on the first neural network model and first interference information, wherein the first interference information is interference information obtained by the first device through channel measurement within a first time, and the first channel quality assessment result indicates channel quality of a channel.

2. The method according to claim 1, wherein the determining, by a first device, a first network parameter corresponding to a neural network structure used by the first device comprises:

sending, by the first device, a first request to a cloud device, wherein the first request is used to request the cloud device to deliver the first network parameter; and

receiving, by the first device, the first network parameter from the cloud device.

3. The method according to claim 2, wherein the first request comprises at least one of the following: capability information, structure information, scenario information, or user level information;

the capability information indicates that the first device supports channel quality assessment by using a neural network model;

the structure information indicates the neural network structure used by the first device;

the scenario information indicates a first scenario in which the first device is currently located; and

the user level information indicates a user level of the first device.

4. The method according to claim 3, wherein the first network parameter is a network parameter corresponding to the neural network structure used by the first device when the first device is in the first scenario.

5. The method according to any one of claims 2 to 4, wherein the sending, by the first device, a first request to a cloud device comprises:

sending, by the first device, the first request to the cloud device when a first condition is met;

the first condition comprises: a packet loss rate of the first device within a time window is greater than or equal to a preset threshold when the first device performs data transmission with a second device based on a second channel quality assessment result; and

the second channel quality assessment result is determined by the first device based on a second neural network model and second interference information obtained by the first device through channel measurement within a second time, and the second neural network model is a neural network model determined by the first device based on a second network parameter delivered by the cloud device and the neural network structure.

6. The method according to claim 1, wherein the determining, by a first device, a first network parameter corresponding to a neural network structure used by the first device comprises:

assessing, by the first device, performance of a second neural network model, to obtain a first performance assessment result, wherein the second neural network model is a neural network model determined by the first device based on a second network parameter delivered by a cloud device and the neural network structure;

sending, by the first device, the first performance assessment result to the cloud device; and

receiving, by the first device, the first network parameter sent by the cloud device, wherein the first network parameter is a network parameter obtained by the cloud device through adjustment based on the first performance assessment result and the second neural network model.

7. The method according to claim 6, wherein the assessing, by the first device, performance of a second neural network model, to obtain a first performance assessment result comprises:

assessing, by the first device, the performance of the second neural network model when a second condition is met, to obtain the first performance assessment result; and

the second condition comprises: a packet loss rate of the first device within a time window is greater than a historical minimum packet loss rate when the first device performs communication transmission with the second device based on a second channel quality assessment result, and the second channel quality assessment result is a channel quality assessment result determined by the first device based on the second neural network model and second interference information obtained by the first device through channel measurement within a second time.

8. The method according to claim 1, wherein the determining, by a first device, a first network parameter corresponding to a neural network structure used by the first device comprises:

   receiving, by the first device, a second request from a cloud device, wherein the second request is used to request the first device to report interference information obtained through channel measurement;
   sending, by the first device, third interference information to the cloud device, wherein the third interference information comprises historical interference information obtained by the first device through channel measurement, and/or interference information obtained by the first device through channel measurement after the first device receives the second request; and
   receiving, by the first device, the first network parameter sent by the cloud device, wherein the first network parameter is a network parameter obtained by the cloud device by updating a second neural network model of the cloud device based on the third interference information.

9. The method according to any one of claims 1 to 8, wherein the first channel quality assessment result is represented by using an adaptive frequency hopping channel map.

10. The method according to any one of claims 1 to 9, wherein the first device comprises a mobile phone or a tablet, and the first device comprises a display screen; and the method further comprises:

    displaying, by the first device, a first identifier;
    detecting, by the first device, a target operation for the first identifier; and
    performing, by the first device, the method according to claim 1 in response to the target operation.

11. A channel quality assessment method, wherein the method comprises:

    determining, by a cloud device, a first network parameter corresponding to a neural network structure used by a first device; and
    sending, by the cloud device, the first network parameter to the first device, wherein the first network parameter is used by the first device to determine a first neural network model based on the neural network structure.

12. The method according to claim 11, wherein before the determining, by a cloud device, a first network parameter corresponding to a neural network structure used by a first device, the method comprises:
    receiving, by the cloud device, a first request from the first device, wherein the first request is used to request the first network parameter corresponding to the neural network structure.

13. The method according to claim 12, wherein the first request comprises at least one of the following: capability information, structure information, scenario information, or user level information;

    the capability information indicates that the first device supports channel quality assessment by using a neural network model;
    the structure information indicates the neural network structure used by the first device;
    the scenario information indicates a first scenario in which the first device is currently located; and
    the user level information indicates a user level of the first device.

14. The method according to claim 13, wherein the first network parameter is a network parameter corresponding to a neural network model structure used by the first device when the first device is in the first scenario.

15. The method according to claim 11, wherein before the determining, by a cloud device, a first network parameter corresponding to a neural network structure used by a first device, the method further comprises:

    receiving, by the cloud device, a first performance assessment result sent by the first device, wherein the first performance assessment result is a first performance assessment result obtained by the first device by assessing performance of a second neural network model, and the second neural network model is a neural network model determined by the cloud device based on a second network parameter and the neural network structure;

and

the determining, by a cloud device, a first network parameter corresponding to a neural network structure used by a first device comprises:

updating, by the cloud device, the second neural network model based on the first performance assessment result, to obtain the first neural network model; and
determining, by the cloud device, the first network parameter corresponding to the first neural network model.

16. The method according to claim 11, wherein before the determining, by a cloud device, a first network parameter corresponding to a neural network structure used by a first device, the method further comprises:

sending, by the cloud device, a second request to the first device, wherein the second request is used to request the first device to report interference information obtained through channel measurement; and
receiving, by the cloud device, third interference information from the first device, wherein the third interference information comprises historical interference information obtained by the first device through channel measurement, and/or interference information obtained by the first device through channel measurement after the first device receives the second request; and
the determining, by a cloud device, a first network parameter corresponding to a neural network structure used by a first device comprises:

updating, by the cloud device, a second neural network model based on the third interference information, to obtain the first neural network model; and
determining, by the cloud device, the first network parameter corresponding to the first neural network model.

17. The method according to claim 15 or 16, wherein the method further comprises:

obtaining, by the cloud device, fourth interference information obtained by one or more devices through channel measurement at N moments; and
updating, by the cloud device, a third neural network model based on the fourth interference information obtained by the one or more devices through measurement at the N moments, to obtain the second neural network model, wherein N is an integer greater than or equal to 1.

18. The method according to claim 15 or 16, wherein the first device is a VIP device, and the first device is a first-type device; and the method further comprises:

obtaining, by the cloud device, fourth interference information obtained by one or more first-type devices through measurement at N moments; and
updating, by the cloud device, a third neural network model based on the fourth interference information obtained by the one or more first-type devices through measurement at the N moments, to obtain the second neural network model, wherein N is an integer greater than or equal to 1.

19. A communication apparatus, wherein the communication apparatus comprises a processing module;

the processing module is configured to determine a first network parameter corresponding to a neural network structure used by a first device;
the processing module is further configured to determine a first neural network model based on the first network parameter and the neural network structure; and
the processing module is further configured to determine a first channel quality assessment result based on the first neural network model and first interference information, wherein the first interference information is interference information obtained by the first device through channel measurement within a first time, and the first channel quality assessment result indicates channel quality of a channel.

20. The communication apparatus according to claim 19, wherein the communication apparatus further comprises a transceiver module;

the transceiver module is configured to send a first request to a cloud device, wherein the first request is used to request the cloud device to deliver the first network parameter; and
the transceiver module is further configured to receive the first network parameter from the cloud device.

21. The communication apparatus according to claim 20, wherein the first request comprises at least one of the following: capability information, structure information, scenario information, or user level information;

the capability information indicates that the first device supports channel quality assessment by using a neural network model;
the structure information indicates the neural network structure used by the first device;
the scenario information indicates a first scenario in which the first device is currently located; and
the user level information indicates a user level of the first device.

22. The communication apparatus according to claim 21, wherein the first network parameter is a network parameter corresponding to the neural network structure used by the first device when the first device is in the first scenario.

23. The communication apparatus according to any one of claims 20 to 22, wherein

the transceiver module is further configured to send the first request to the cloud device when a first condition is met;
the first condition comprises: a packet loss rate of the first device within a time window is greater than or equal to a preset threshold when the first device performs data transmission with a second device based on a second channel quality assessment result; and
the second channel quality assessment result is determined by the first device based on a second neural network model and second interference information obtained by the first device through channel measurement within a second time, and the second neural network model is a neural network model determined by the first device based on a second network parameter delivered by the cloud device and the neural network structure.

24. The communication apparatus according to claim 19, wherein

the processing module is further configured to assess performance of a second neural network model, to obtain a first performance assessment result, wherein the second neural network model is a neural network model determined by the first device based on a second network parameter delivered by a cloud device and the neural network structure;
a transceiver module is further configured to send the first performance assessment result to the cloud device; and
the transceiver module is further configured to receive the first network parameter sent by the cloud device, wherein the first network parameter is a network parameter obtained by the cloud device through adjustment based on the first performance assessment result and the second neural network model.

25. The communication apparatus according to claim 24, wherein

the processing module is further configured to assess the performance of the second neural network model when a second condition is met, to obtain the first performance assessment result; and
the second condition comprises: a packet loss rate of the first device within a time window is greater than a historical minimum packet loss rate when the first device performs communication transmission with the second device based on a second channel quality assessment result, and the second channel quality assessment result is a channel quality assessment result determined by the first device based on the second neural network model and second interference information obtained by the first device through channel measurement within a second time.

26. The communication apparatus according to claim 19, wherein

a transceiver module is further configured to receive a second request from a cloud device, wherein the second request is used to request the first device to report interference information obtained through channel measurement;
the transceiver module is further configured to send third interference information to the cloud device, wherein the third interference information comprises historical interference information obtained by the first device through channel measurement, and/or interference information obtained by the first device through channel measurement after the first device receives the second request; and
the transceiver module is further configured to receive the first network parameter sent by the cloud device, wherein the first network parameter is a network parameter obtained by the cloud device by updating a second neural network model of the cloud device based on the third interference information.

27. The communication apparatus according to any one of claims 19 to 26, wherein the first channel quality assessment result is represented by using an adaptive frequency hopping channel map.

28. A communication apparatus, wherein the communication apparatus comprises a processing module and a transceiver module;

the processing module is configured to determine a first network parameter corresponding to a neural network structure used by a first device; and

the transceiver module is configured to send the first network parameter to the first device, wherein the first network parameter is used by the first device to determine a first neural network model based on the neural network structure.

29. The communication apparatus according to claim 28, wherein
the transceiver module is further configured to receive a first request from the first device, wherein the first request is used to request the first network parameter corresponding to the neural network structure.

30. The communication apparatus according to claim 29, wherein the first request comprises at least one of the following: capability information, structure information, scenario information, or user level information;

the capability information indicates that the first device supports channel quality assessment by using a neural network model;

the structure information indicates the neural network structure used by the first device;

the scenario information indicates a first scenario in which the first device is currently located; and

the user level information indicates a user level of the first device.

31. The communication apparatus according to claim 30, wherein the first network parameter is a network parameter corresponding to a neural network model structure used by the first device when the first device is in the first scenario.

32. The communication apparatus according to claim 28, wherein

the transceiver module is further configured to receive a first performance assessment result sent by the first device, wherein the first performance assessment result is a first performance assessment result obtained by the first device by assessing performance of a second neural network model, and the second neural network model is a neural network model determined by a cloud device based on a second network parameter and the neural network structure; and

that the processing module is further configured to determine a first network parameter corresponding to a neural network structure used by a first device comprises:

the processing module is further configured to update the second neural network model based on the first performance assessment result, to obtain the first neural network model; and

the processing module is further configured to determine the first network parameter corresponding to the first neural network model.

33. The communication apparatus according to claim 28, wherein

the transceiver module is further configured to send a second request to the first device, wherein the second request is used to request the first device to report interference information obtained through channel measurement; and

the transceiver module is further configured to receive third interference information from the first device, wherein the third interference information comprises historical interference information obtained by the first device through channel measurement, and/or interference information obtained by the first device through channel measurement after the first device receives the second request; and

that the processing module is configured to determine a first network parameter corresponding to a neural network structure used by a first device comprises:

the processing module updates a second neural network model based on the third interference information, to obtain the first neural network model; and

the processing module determines the first network parameter corresponding to the first neural network model.

**34.** The communication apparatus according to claim 32 or 33, wherein

the transceiver module is further configured to obtain fourth interference information obtained by one or more devices through channel measurement at N moments; and
the processing module is further configured to update a third neural network model based on the fourth interference information obtained by the one or more devices through measurement at the N moments, to obtain the second neural network model, wherein N is an integer greater than or equal to 1.

**35.** A communication apparatus, wherein the communication apparatus comprises a processor; and
the processor is configured to execute a computer program or instructions stored in a memory, so that the communication apparatus performs the method according to any one of claims 1 to 10, or so that the communication apparatus performs the method according to any one of claims 11 to 18.

**36.** A computer-readable storage medium, wherein the computer-readable storage medium comprises program instructions, and when the program instructions are directly or indirectly executed, the method according to any one of claims 1 to 10 and/or claims 11 to 18 is implemented.

**37.** A chip system, wherein the chip system comprises at least one processor, the processor is configured to execute a computer program or instructions stored in a memory, and when the computer program or the instructions is/are executed in the at least one processor, the method according to any one of claims 1 to 10 and/or claims 11 to 18 is implemented.

FIG. 1a

FIG. 1b

First device

Antenna 1

Antenna 2

| Mobile communication module [150] | Wireless communication module [160] |

Speaker [170A]

Receiver [170B]

Microphone [170C]

Headset jack [170D]

Audio module [170]

Display screens 1 to N [194]

Cameras 1 to N [193]

Indicator [192]

Motor [191]

Button [190]

Internal memory [121]

SIM card interfaces 1 to N [195]

External memory interface [120]

Processor

[110]

Sensor module[180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 1c

Adaptive frequency hopping command

Effective time (AFH_Instant)

Primary device ──────────────────────────────────────────────────────────► t

Acknowledgement character (ACK)

Secondary device ──────────────────────────────────────────────────────────► t

Frequency hopping
sequence (on)

Non-adaptive frequency hopping sequence

Adaptive frequency hopping sequence A

Frequency hopping
sequence (off)

Adaptive frequency hopping sequence A

Non-adaptive frequency hopping sequence

Frequency hopping
sequence (update)

Adaptive frequency hopping sequence A

Adaptive frequency hopping sequence B

FIG. 2a

EP 4 258 574 A1

Sequence selection      Frequency hopping map

28

UAP/LAP

Adaptive frequency hopping
selection mechanism

Channel index
(RF channel
index)

27

CLOCK

Frozen CLOCK   N   $k_{offset}$   $k_{nudge}$   Interlace_Offset

FIG. 2b

| First device | Cloud device |
|---|---|

301: The first device sends a first
request to the cloud device

302: The first device receives a first network
parameter from the cloud device

303: The first device determines a first
neural network model based on the
first network parameter and a neural
network structure

304: The first device determines a first
channel quality assessment result based
on the first neural network model and
first interference information

FIG. 3

FIG. 4

First device

Cloud device

501: The first device receives a second network parameter from the cloud device

502: The first device determines a second neural network model based on the second network parameter and a neural network structure

503: The first device determines a second channel quality assessment result based on a second neural network model and second interference information obtained by the first device through measurement within a second time

504: The first device assesses performance of the second neural network model based on the second channel quality assessment result when a second condition is met, to obtain a first performance assessment result

505: The first device sends the first performance assessment result to the cloud device

506: The cloud device updates the second neural network model based on the first performance assessment result, to obtain a first neural network model

FIG. 5a

S1: A cloud device obtains fourth interference information obtained by one or more devices through channel measurement at N moments

S2: The cloud device updates a third neural network model based on the fourth interference information obtained by the one or more devices through channel measurement at the N moments, to obtain a second neural network model

FIG. 5b

First device

Cloud device

601: The first device sends a third request to the cloud device

602: The first device receives a first interference information request sent by the cloud device

603: The first device measures a channel based on the first interference information request to obtain first interference information

604: The first device sends the first interference information to the cloud device

605: The cloud device determines a first channel quality assessment result based on a first neural network model and the first interference information

606: The first device receives the first channel quality assessment result from the cloud device

FIG. 6

| First device | | Cloud device |
|---|---|---|

701: The first device receives a fourth request from the cloud device

702: The first device performs channel measurement based on the fourth request to obtain interference information

703: The first device sends third interference information to the cloud device, where the third interference information includes historical interference information obtained by the first device through channel measurement, and/or interference information obtained by the first device through channel measurement after the first device receives the fourth request

704: The cloud device updates a second neural network model based on the third interference information, to obtain a first neural network model

FIG. 7

```
┌─────────────────────┐                      ┌─────────────────────┐
│    First device     │                      │    Cloud device     │
└─────────────────────┘                      └─────────────────────┘
          │                                            │
┌─────────────────────────────────┐                   │
│ 801: The first device obtains   │                   │
│ second interference information │                   │
│ through measurement within a    │                   │
│ second time                     │                   │
└─────────────────────────────────┘                   │
          │  802: The first device sends the second   │
          │  interference information to the cloud     │
          │  device                                    │
          │ ─────────────────────────────────────────▶│
          │                          ┌─────────────────────────────────────┐
          │                          │ 803: The cloud device determines a   │
          │                          │ second channel quality assessment    │
          │                          │ result based on the second           │
          │                          │ interference information and a        │
          │                          │ second neural network model          │
          │                          └─────────────────────────────────────┘
          │  804: The first device receives the second │
          │  channel quality assessment result from the│
          │  cloud device                              │
          │ ◀─────────────────────────────────────────│
┌─────────────────────────────────┐                   │
│ 805: The first device assesses  │                   │
│ the second channel quality      │                   │
│ assessment result to obtain a   │                   │
│ second assessment result        │                   │
└─────────────────────────────────┘                   │
          │  806: The first device sends the second    │
          │  assessment result to the cloud device     │
          │ ─────────────────────────────────────────▶│
          │                          ┌─────────────────────────────────────┐
          │                          │ 807: The cloud device updates the    │
          │                          │ second neural network model based on │
          │                          │ the second performance assessment    │
          │                          │ result, to obtain a first neural     │
          │                          │ network model                        │
          │                          └─────────────────────────────────────┘
          │                                            │
```

FIG. 8

$$z_t = \sigma(W_z x_t + U_z h_{t-1} + b_z)$$
$$r_t = \sigma(W_r x_t + U_r h_{t-1} + b_r)$$
$$\tilde{h}_t = \tanh(W_h x_t + U_h(r_t \odot h_{t-1}) + b_h)$$
$$h_t = (1 - z_t) \odot h_{t-1} + z_t \odot \tilde{h}_t$$

FIG. 9

A1: A first device displays a first identifier

A2: The first device detects a target operation for the first identifier

A3: The first device performs the channel quality assessment method in response to the target operation

FIG. 10

FIG. 11

Bluetooth headset

69% | Left earbud battery level

70% | Right earbud battery level

33% | Charging case battery level

| Shortcut operation | Wear detection |

| Firmware update | Intelligent anti-interference |

FIG. 12

Communication apparatus 1300

~ 1310          ~ 1320

| Processing module | — | Transceiver module |

FIG. 13

Communication apparatus 1400

~ 1410          ~ 1420

| Processing module | — | Transceiver module |

FIG. 14

Communication apparatus 1500

1510
1520

Transceiver module

Processing module

FIG. 15

Communication apparatus 1600

1610
1620

Processing module

Transceiver module

FIG. 16

## INTERNATIONAL SEARCH REPORT

| International application No. |
| --- |
| **PCT/CN2021/142308** |

**A.    CLASSIFICATION OF SUBJECT MATTER**

H04B 17/309(2015.01)i

According to International Patent Classification (IPC) or to both national classification and IPC

**B.    FIELDS SEARCHED**

Minimum documentation searched (classification system followed by classification symbols)

H04B;H04L

Documentation searched other than minimum documentation to the extent that such documents are included in the fields searched

Electronic data base consulted during the international search (name of data base and, where practicable, search terms used)

CNTXT; WPABSC; ENTXTC; CNKI; 3GPP: 信号, 信道, 跳频, 蓝牙, 地图, 图案, 图谱, 序列, 机器学习, 深度学习, 神经网络, 训练, 模型, signal, channel, hop, bluetooth, map, pattern, sequence, machine learning, neural net, training

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 109905868 A (CENTRAL SOUTH UNIVERSITY) 18 June 2019 (2019-06-18) description paragraphs 38-58 | 1, 19, 35-27 |
| Y | CN 108243216 A (HUAWEI TECHNOLOGIES CO., LTD.) 03 July 2018 (2018-07-03) description, paragraphs [0063]-[0248] | 1, 19, 35-37 |
| X | CN 108243216 A (HUAWEI TECHNOLOGIES CO., LTD.) 03 July 2018 (2018-07-03) description, paragraphs [0063]-[0248] | 11, 28, 35-27 |
| A | CN 109861720 A (SHANGHAI ADVANCED RESEARCH INSTITUTE, CHINESE ACADEMY OF SCIENCES et al.) 07 June 2019 (2019-06-07) entire document | 1-37 |
| A | US 2019222256 A1 (AT & T INTELLECTUAL PROPERTY I, L.P.) 18 July 2019 (2019-07-18) entire document | 1-37 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 March 2022** | **18 March 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/142308**

| Patent document cited in search report | | | Publication date (day/month/year) | Patent family member(s) | | | Publication date (day/month/year) |
|---|---|---|---|---|---|---|---|
| CN | 109905868 | A | 18 June 2019 | None | | | |
| CN | 108243216 | A | 03 July 2018 | WO | 2018121282 | A1 | 05 July 2018 |
| | | | | EP | 3557846 | A1 | 23 October 2019 |
| | | | | EP | 3557846 | A4 | 25 December 2019 |
| | | | | US | 2019318245 | A1 | 17 October 2019 |
| CN | 109861720 | A | 07 June 2019 | None | | | |
| US | 2019222256 | A1 | 18 July 2019 | WO | 2019139732 | A2 | 18 July 2019 |
| | | | | WO | 2019139732 | A3 | 29 August 2019 |
| | | | | US | 2020186190 | A1 | 11 June 2020 |
| | | | | US | 10608697 | B2 | 31 March 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011637835X